# EUROPÄISCHE PATENTSCHRIFT

(11) **EP 1 364 134 B1**
(45) Veröffentlichungstag und Bekanntmachung des Hinweises auf die Patenterteilung: **15.08.2007**
(21) Anmeldenummer: 02702323.3
(22) Anmeldetag: 29.01.2002
(51) Int. Cl.: F16D 13/72

(54) **KUPPLUNGSANORDNUNG**
CLUTCH ARRANGEMENT
SYSTEME D'EMBRAYAGE

(30) Priorität: 02.03.2001 DE 10110097; 25.05.2001 DE 10125628
(43) Veröffentlichungstag der Anmeldung: 26.11.2003
(73) Patentinhaber: ZF Sachs AG, 97424 Schweinfurt (DE)
(72) Erfinder: SASSE, Christoph, 97422 Schweinfurt (DE)
(86) Internationale Anmeldenummer: PCT/EP2002/000899
(87) Internationale Veröffentlichungsnummer: WO 2002/070913

(56) Entgegenhaltungen:
- FR-A- 1 113 195
- FR-A- 2 251 747
- FR-A- 2 782 361
- US-A- 2 107 954
- US-A- 4 516 672
- US-A- 6 142 280
- PATENT ABSTRACTS OF JAPAN vol. 009, no. 139 (M-387), 14. Juni 1985 (1985-06-14) -& JP 60 018623 A (AISHIN WARNER KK), 30. Januar 1985 (1985-01-30)

## Beschreibung

Die vorliegende Erfindung betrifft eine Kupplungsanordnung, insbesondere für ein Kraftfahrzeug, umfassend eine mit Fluid gefüllte oder füllbare Gehäuseanordnung, wenigstens ein mit der Gehäuseanordnung gemeinsam drehbares erstes Reiborgan und wenigstens ein mit einem Abtriebsorgan gemeinsam drehbares zweites Reiborgan, welches zur Herstellung einer Reibwechselwirkung in Anlage an wenigstens einem ersten Reiborgan bringbar ist.

Eine luftgekühlte Kupplung nach der Oberbegriff des Anspruchs 1 ist aus FR-A-1.113.195 bekannt.

Eine derartige im Allgemeinen auch als nasslaufende Kupplung bekannte Kupplungsanordnung ist beispielsweise aus der FR 2 251 747 A1 bekannt. Diese Kupplungsanordnung umfasst ein mit der Gehäuseanordnung gemeinsam drehbares erstes Reiborgan, das zum einen durch eine mit einem Antrieb, wie der Kurbelwelle einer Brennkraftmaschine, drehfeste Schwungmasse gebildet ist, und zum anderen durch eine Anpressplatte, die in einem mit der Schwungmasse drehfesten Kupplungsgehäuse vorgesehen ist. Ein mit einer Getriebeeingangswelle als Abtriebsorgan gemeinsam drehbares zweites Reiborgan wird durch eine mit Reibbelagsegmenten versehene Kupplungsscheibe gebildet.

Die Reiborgane sind, entsprechend der jeweiligen Auslenkposition einer im Kupplungsgehäuse angeordneten Membranfeder, in Reibwechselwirkung miteinander bringbar. Dadurch entsteht zwischen der Gehäuseanordnung und einer Abtriebswelle eine durch coulombsche Reibung erzeugte Drehmomentübertragung. Insbesondere im Schlupfbetrieb, beispielsweise beim Anfahren, wird durch die reibend aneinander abgleitenden Reiborgane zumindest ein Teil des Antriebsmomentes des Antriebsaggregats in Wärme umgesetzt. Vor allem bei länger anhaltenden Schlupfzuständen, wie z.B. beim Anfahren am Berg, kann dies zu einer Überhitzung im Bereich der Reiborgane und ggf. zur Beschädigung von Reibbelagsegmenten führen, die am zweiten Reiborgan vorgesehen sind.

Die Reibbelagsegmente sind in Umfangsrichtung jeweils durch Unterbrechungen voneinander getrennt, wobei diese Unterbrechungen auch in einem die Reibbelagsegmente beidseits aufnehmenden Reibbelagträger vorgesehen sind. Die Unterbrechungen bilden Kanäle, die mit einer Richtungskomponente in Drehrichtung der Reiborgane nach radial außen verlaufen, wo sie mit jeweils einem Schaufelelement zusammen wirken, das am jeweiligen Reibbelagsegment vorgesehen ist. Jedes dieser Schaufelelemente wirkt mit einer sich in Drehrichtung vor dem jeweiligen Schaufelelement befindenden Fluidtasche zusammen. Infolge der Drehbewegung der Reiborgane wird somit über die Schaufelelemente in den Fluidtaschen angesammeltes Fluid in den Kanälen nach radial innen gefördert, um sich von dort aus in angrenzende Nutungen zu verteilen, die in den Reibbelagsegmenten ausgebildet sind. Unter Fliehkrafteinfluss strömt das Fluid innerhalb der Nutungen wieder nach radial außen.

Verständlicherweise wird in die Kanäle eingedrungenes Fluid nur dann nach radial innen strömen, wenn bei begrenzter Drehzahl der Reiborgane eine lediglich geringe Fliehkraftwirkung anliegt. Mit zunehmender Drehzahl muss damit gerechnet werden, dass das Fluid bereits im Bereich des radialen Außenrandes der Reibbelagsegmente über deren Nutungen nach radial außen abströmt, und somit die Kühlung lediglich eines kleinen Radialbereiches der Reibbelagsegmente vorliegt. Die Kupplungsanordnung ist demnach völlig ungeeignet, um eine Fluidströmung entstehen zu lassen, durch welche unabhängig vom jeweiligen Betriebszustand zumindest eines der Reiborgane, insbesondere hierbei das die Reibbelagsegmente tragende zweite Reiborgan, mit Fluid vollflächig versorgt werden kann.

Das Problem einer Überhitzung besteht grundsätzlich auch bei einer Kupplungsanordnung, wie sie beispielsweise aus der DE 199 17 893 A1 bekannt ist. Diese Kupplungsanordnung umfasst mehrere in Reibwechselwirkung miteinander bringbare Reiborgane, die als Lamellen ausgebildet sind. Durch einen Kupplungskolben können diese Lamellen gegeneinander gepresst werden, so dass zwischen der Gehäuseanordnung und einer Abtriebswelle eine durch coulombsche Reibung erzeugte Drehmomentübertragung erhalten werden kann. Insbesondere im Schlupfbetrieb, beispielsweise beim Anfahren, wird durch die reibend aneinander abgleitenden Reiborgane zumindest ein Teil des Antriebsmomentes des Antriebsaggregats in Wärme umgesetzt. Vor allem bei länger anhaltenden Schlupfzuständen, wie z.B. beim Anfahren am Berg, kann dies zu einer Überhitzung im Bereich der Reiborgane und ggf. zur Beschädigung von Reibbelägen derselben führen. Um für Kühlung zu sorgen, ist eine Fluidströmungsanordnung vorgesehen, durch welche, beispielsweise durch eine in der Getriebeanordnung vorgesehene Fluidförderpumpe, Fluid in die Gehäuseanordnung eingeleitet und aus der Gehäuseanordnung abgezogen werden kann. Das Fluid strömt dabei entlang der Reiborgane, nimmt Wärme auf und transportiert diese Wärme aus dem Bereich der Kupplungsanordnung heraus. Das beim Durchströmen der Kupplungsanordnung erwärmte Fluid kann beispielsweise in einem Getriebekühler wieder gekühlt werden. Die auf diese Art und Weise aufgebaute Fluidströmung führt, da sie vergleichsweise langsam ist, dazu, dass die verschiedenen Reiborgane mit einer Fluidmenge von etwa 10 l/min umströmt werden. Bei sehr starken Belastungen kann auch mit dieser Umströmung oftmals nicht die erforderliche Wärmeabfuhr erreicht werden.

Es ist die Aufgabe der vorliegenden Erfindung, eine nasslaufende Kupplungsanordnung, insbesondere für ein Kraftfahrzeug, bereitzustellen, bei welcher auch bei starker Belastung die Gefahr einer zumindest lokalen Überhitzung weitgehend ausgeschlossen werden kann.

Erfindungsgemäß wird diese Aufgabe gelöst durch eine Kupplungsanordnung, insbesondere für ein Kraftfahrzeug, nach Anspruch 1.

Da bei der erfindungsgemäßen Kupplungsanordnung also durch die Reiborgane selbst eine diese umströmende Fluidzirkulation induziert wird, wobei nicht ausgeschlossen sein soll, dass noch andere Elemente zur Erzeugung der Fluidzirkulation beitragen, wird erreicht, dass das in der Gehäuseanordnung vorhandene Fluid, bevor es im Rahmen der allgemein vorhandenen Fluidströmung ausgetauscht wird, mehrfach an den Reiborganen entlang strömt und somit auf Grund der vorhandenen Wärmespeicherkapazität des Fluids mit diesem auch deutlich mehr Wärme abgeführt werden kann, als dies beim nur einmaligen Strömen entlang der Reiborgane möglich wäre. Diese Anordnung ist besonders bei kurzzeitigen, starken Belastungen vorteilhaft, welche dann zu einer Erhöhung der Temperatur des Fluids führen. Im Rahmen des allgemein vorhandenen Fluidaustausches wird dieses auf deutlich höhere Temperaturen gebrachte Fluid jedoch aus der Gehäuseanordnung abgezogen und im Getriebekühler oder einem sonstigen Kühler wieder auf normale Temperatur gebracht. Es lassen sich durch die erfindungsgemäße, vermittels der Reiborgane selbst induzierte Fluidzirkulation Strömungen induzieren, bei welchen die Reiborgane oder zumindest ein Teil derselben mit einer Fluidmenge von 3000 l/min umströmt werden.

Eine Maßnahme, durch welche eine sehr hohe Fluidfördereffizienz bereitgestellt werden kann, ist, dass wenigstens ein erstes Reiborgan und wenigstens ein zweites Reiborgan zur Erzeugung der Fluidzirkulation ausgebildet sind. Vorzugsweise kann vorgesehen sein, dass wenigstens ein erstes Reiborgan wenigstens eine Fluidförderfläche aufweist und dass wenigstens ein zweites Reiborgan wenigstens eine Fluidförderfläche aufweist. Es sei hier darauf hingewiesen, dass im Sinne der vorliegenden Erfindung eine Fluidförderfläche eine derartige Fläche ist, welche auf das zur Zirkulation anzuregende Fluid einwirkt, um dieses in Bewegung zu versetzen, also beispielsweise um dem Fluid eine Strömungsgeschwindigkeit in Umfangsrichtung zu geben und somit dafür zu sorgen, dass fliehkraftbedingt dieses Fluid sich nach radial außen bewegen wird. Gleichwohl ist eine Fluidförderfläche auch eine derartige Fläche, welche beispielsweise nach Art eines Turbinenrades zur Momentenabstützung eines zur Strömung angeregten Fluids sorgt und somit letztendlich insbesondere auch auf Grund der vorhandenen Drehzahldifferenz zwischen zwei Fluidförderflächen zur Förderung des Fluids und somit zur Erzeugung der die erfindungsgemäße Kühlwirkung induzierenden Fluidzirkulation beiträgt. Ein weiterer bedeutungsvoller Aspekt bei der vorliegenden Erfindung ist, dass durch die aufgebaute Fluidzirkulation nicht nur verbessert Wärme aus dem Bereich der thermisch beaufschlagten Oberflächen abgeführt werden kann, sondern dass durch Drehmomentenabstützung diese Fluidzirkulation auch nach Art einer Pumpe/Turbine-Anordnung zur Drehmomentübertragung beiträgt. Dies bedeutet, dass bei derartigen nasslaufenden Kupplungen die Drehmomentübertragungskapazität erhöht werden kann. Des Weiteren ist diese durch Fluidzirkulation erzeugte Drehmomentübertragung bereits in einem Zustand wirksam, in dem die reibend miteinander in Wechselwirkung bringbaren Oberflächenbereiche noch nicht in Kontakt stehen.

Um eine möglichst gute Fluidfördereffizienz bereitstellen zu können, kann gemäß der vorliegenden Erfindung vorgesehen sein, dass die wenigstens eine Fluidförderfläche eine Radialerstreckungskomponente und eine Axialerstreckungskomponente aufweist.

Beispielsweise kann vorgesehen sein, dass die wenigstens eine Fluidförderfläche wenigstens bereichsweise mit einer im Wesentlichen tangential orientierten Flächennormalen ausgebildet ist.

Bei einer besonders einfach aufzubauenden erfindungsgemäßen Ausgestaltungsform kann die wenigstens eine Fluidförderfläche dadurch vorgesehen werden, dass das wenigstens eine erste Reiborgan oder/und das wenigstens eine zweite Reiborgan an wenigstens einer axialen Seite eine die wenigstens eine Fluidförderfläche bereitstellende Reibbelaganordnung aufweist. Dies kann beispielsweise realisiert werden, indem die wenigstens eine Fluidförderfläche wenigstens eine einen nutartigen Kanal in der Reibbelaganordnung in Umfangsrichtung begrenzende Wandung umfasst.

Um die Fluidfördereffizienz weiter erhöhen zu können, wird vorgeschlagen, dass das wenigstens eine erste Reiborgan oder/und das wenigstens eine zweite Reiborgan an beiden axialen Seiten jeweils Fluidförderflächen bereitstellende Reibbelaganordnungen aufweist.

Bei einer die Reibbelastung auf verschiedene Reiborgane besonders gut verteilenden Ausgestaltungsform kann vorgesehen sein, dass das wenigstens eine erste Reiborgan oder/und das wenigstens eine zweite Reiborgan nur an einer axialen Seite eine wenigstens eine Fluidförderfläche bereitstellende Reibbelaganordnung aufweist und dass der anderen axialen Seite eine Reibbelaganordnung eines weiteren Reiborgans gegenüberliegt.

In einer alternativen Ausgestaltungsform, welche eine hohe Fluidfördereffizienz bereitstellen kann, kann vorgesehen sein, dass das wenigstens eine erste Reiborgan oder/und das wenigstens eine zweite Reiborgan einen Reibbelagträger aufweist, welcher vorzugsweise an wenigstens einer axialen Seite eine Reibbelaganordnung trägt, und dass wenigstens eine Fluidförderfläche durch den Reibbelagträger bereitgestellt ist. Dies kann beispielsweise dadurch erreicht werden, dass der Reibbelagträger in Umfangsrichtung aufeinander folgende, axial zueinander versetzte Belagtrageabschnitte aufweist, welche durch Verbindungsabschnitte miteinander verbunden sind, und dass die wenigstens eine Fluidförderfläche durch einen Verbindungsabschnitt bereitgestellt ist.

Um den Aufbau so einfach als möglich vornehmen zu können, wird vorgeschlagen, dass der Reibbelagträger durch Umformen eines im Wesentlichen ringartigen Blechrohlings gebildet ist.

Weiter kann vorgesehen sein, dass an den zueinander axial versetzten Belagtrageabschnitten an deren jeweils voneinander weg gerichteten axialen Seiten Belagsegmente jeweiliger Reibbelaganordnungen vorgesehen sind.

Eine sehr hohe Fluidfördereffizienz kann erhalten werden, wenn eine Mehrzahl von in Umfangsrichtng aufeinander folgenden Fluidförderflächen an dem wenigstens einen ersten Reiborgan oder/und dem wenigstens einen zweiten Reiborgan vorgesehen ist.

Bei der erfindungsgemäßen Kupplungsanordnung kann ein Anpresselement vorgesehen sein, durch welches die ersten und zweiten Reiborgane in Reibwechselwirkung miteinander bringbar sind, wobei durch das Anpresselement ein Innenraumbereich der Gehäuseanordnung in einen die Reiborgane enthaltenden ersten Raumbereich und einen zweiten Raumbereich unterteilt ist.

Wie bereits angesprochen, ist es vorteilhaft für einen nahezu permanenten Austausch des in der Gehäuseanordnung vorhandenen Fluids zu sorgen, um die darin gespeicherte Wärme abführen zu können. Es wird daher vorgeschlagen, dass eine Fluidströmungsanordnung vorgesehen ist zur Zufuhr von Fluid in den ersten Raumbereich und zur Abfuhr von Fluid aus dem ersten Raumbereich im Wesentlichen unabhängig von der Fluidzirkulation.

Bei einer alternativen Ausgestaltungsform kann vorgesehen sein, dass der erste Raumbereich gegen Fluidaustausch im Wesentlichen vollständig abgeschlossen ist.

Zur Einstellung eines Drehmoment übertragenden Zustands kann vorgesehen sein, dass in den zweiten Raumbereich Fluid zur Beaufschlagung des Anpresselements zur Erzeugung der Reibwechselwirkung der Reiborgane einleitbar ist.

Bei einer alternativen Ausgestaltungsform kann der Drehmoment übertragende Zustand dadurch erhalten werden, dass das Anpresselement zur Erzeugung der Reibwechselwirkung durch eine im Wesentlichen außeralb der Gehäuseanordnung vorgesehene Betätigungsanordnung beaufschlagbar ist.

Für eine möglichst gute Wärmeabfuhr aus dem Bereich der reibend miteinander wechseiwirkenden Oberflächen ist eine möglichst starke Fluidzirkulation vorteilhaft. Daher kann gemäß einem weiteren vorteilhaften Aspekt der vorliegenden Erfindung vorgesehen sein, dass das wenigstens eine erste Reiborgan oder/und das wenigstens eine zweite Reiborgan einen Reibbelagträger mit einer zur Erzeugung der Fluidzirkulation beitragenden lappenartigen Abbiegung aufweist.

Weiter ist es bei der erfindungsgemäßen Kupplungsanordnung zum Erhalt einer effizienten Fluidzirkulation vorteilhaft, dass die Anzahl der an dem wenigstens einen ersten Reiborgan vorgesehenen Fluidförderflächen oder/und die Anzahl der an dem wenigstens einen zweiten Reiborgan vorgesehenen Fluidförderflächen im Bereich von 6 - 48, vorzugsweise bei 24, liegt oder/und dass bei dem wenigstens einen ersten Reiborgan oder/und bei dem wenigstens einen zweiten Reiborgan:
- eine Fluidförderflächeninnenabmessung zu einer Fluidförderflächenaußenabmessung ein Verhältnis im Bereich von 0,35 - 0,85, vorzugsweise etwa 0,6, aufweist oder/und
- eine Außenabmessung eines äußeren Fluidumlenkungsraumes zu einer Fluidförderflächenaußenabmessung ein Verhältnis im Bereich von 1,03 - 1,2, vorzugsweise etwa 1,1, aufweist oder/und
- eine Innenabmessung eines inneren Fluidumlenkungsraumes zu einer Fluidförderflächeninnenabmessung ein Verhältnis von 0,4 - 0,9, vorzugsweise etwa 0,7, aufweist.

Bei einer weiteren bevorzugten Ausgestaltungsform kann vorgesehen sein, dass eine Axialabmessung eines durch die zur Fluidzirkulation beitragenden ersten Reiborganes eingenommenen Axialerstreckungsbereiches zu einer Axialabmessung eines durch die zur Fluidzirkulation beitragenden zweiten Reiborganes eingenommenen Axialerstreckungsbereiches ein Verhältnis im Bereich von 0,5 - 1,2, vorzugsweise etwa - 1, aufweist. In Verbindung mit der Erzeugung einer Fluidzirkulation hat es sich als vorteilhaft herausgestellt, wenn an wenigstens einem ersten Reiborgan oder/und an wenigstens einem zweiten Reiborgan ein Reibbelag vorgesehen ist, dessen Innenabmessung zu seiner Außenabmessung ein Verhältnis im Bereich von 0,6 - 0,9, vorzugsweise 0,75, aufweist.

Ferner ist bei der erfindungsgemäßen Kupplungsanordnung vorzugsweise eine Drehschwingungsdämpfungsanordnung vorgesehen, welche im Drehmomentübertragungsweg zwischen einem mit der Gehäuseanordnung zu koppelnden Antriebsorgan und dem wenigstens einen ersten Reiborgan vorgesehen sein kann oder/und im Drehmomentübertragungsweg zwischen dem wenigstens einen zweiten Reiborgan und dem Abtriebsorgan vorgesehen sein kann.

Ferner kann bei der erfindungsgemäßen Kupplungsanordnung eine Starter-Generator-Anordnung vorgesehen sein, wobei eine vorzugsweise Permanentmagneten tragende Rotoranordnung der Starter-Generator-Anordnung mit der Gehäuseanordnung zur gemeinsamen Drehung gekoppelt ist.

Die vorliegende Erfindung wird nachfolgend mit Bezug auf die beiliegenden Zeichnungen anhand bevorzugter Ausgestaltungsformen detailliert beschrieben. Es zeigen:
- Fig. 1: eine Teil-Längsschnittansicht einer erfindungsgemäßen Kupplungsanordnung;
- Fig. 2: eine Teil-Axialansicht eines bei der Kupplungsanordnung der Fig. 1 eingesetzten Reiborgans;
- Fig. 3: eine Ansicht des in Fig. 2 dargestellten Reiborgans von radial außen;
- Fig. 4: eine Teil-Axialansicht eines alternativ ausgestalteten Reiborgans;
- Fig. 5: eine Abwandlung des in Fig. 4 dargestellten Reiborgans;
- Fig. 6: eine alternative Ausgestaltungsform der erfindungsgemäßen Kupplungsanordnung;
- Fig. 7: eine Teil-Axialansicht eines bei der Kupplungsanordnung der Fig. 6 eingesetzten Reiborgans;
- Fig. 8: eine der Fig. 6 entsprechende Ansicht einer weiteren alternativen Ausgestaltungsform der erfindungsgemäßen Kupplungsanordnung;
- Fig. 9: eine weitere Darstellung einer alternativen Ausgestaltungsform der erfindungsgemäßen Kupplungsanordnung;
- Fig. 10: eine Teil-Axialansicht eines bei der Ausgestaltungsform gemäß Fig. 9 eingesetzten Reiborgans;
- Fig. 11: eine Teil-Axialansicht eines weiteren bei der Ausgestaltungsform gemäß Fig. 9 eingesetzten Reiborgans;
- Fig. 12 - 15: verschiedene Ausgestaltungsformen von Reibbelagträgern für Außen- bzw. Innenlamellen;
- Fig. 16: eine Teil-Schnittansicht einer alternativen Ausgestaltungsart einer erfindungsgemäßen Kupplungsanordnung;
- Fig. 17: eine perspektivische Ansicht eines bei der Ausgestaltungsform gemäß Fig. 16 einsetzbaren Fluidförderflächenelementes;
- Fig. 18: eine Schnittansicht eines Reiborgans;
- Fig. 19 - 21: Teil-Längsschnittansichten erfindungsgemäßer Kupplungs-anordnungen, welche die verschiedenen Möglichkeiten der Fluidströmung darstellen;
- Fig. 22: eine Teil-Längsschnittansicht einer erfindungsgemäßen Kupplungsanordnung, anhand welcher verschiedene Abmessungen dargestellt sind;
- Fig. 23: eine Teil-Längsschnittansicht eines Außenlamellenträgers;
- Fig. 24: eine Teil-Längsschnittansicht einer erfindungsgemäßen Kupplungsanordnung gemäß einer alternativen Ausgestaltungsform;
- Fig. 25 - 30: weitere Ausgestaltungsformen der erfindungsgemäßen Kupplungsanordnung in Verbindung mit einem Drehschwingungsdämpfer bzw. einer Starter-Generator-Anordnung.

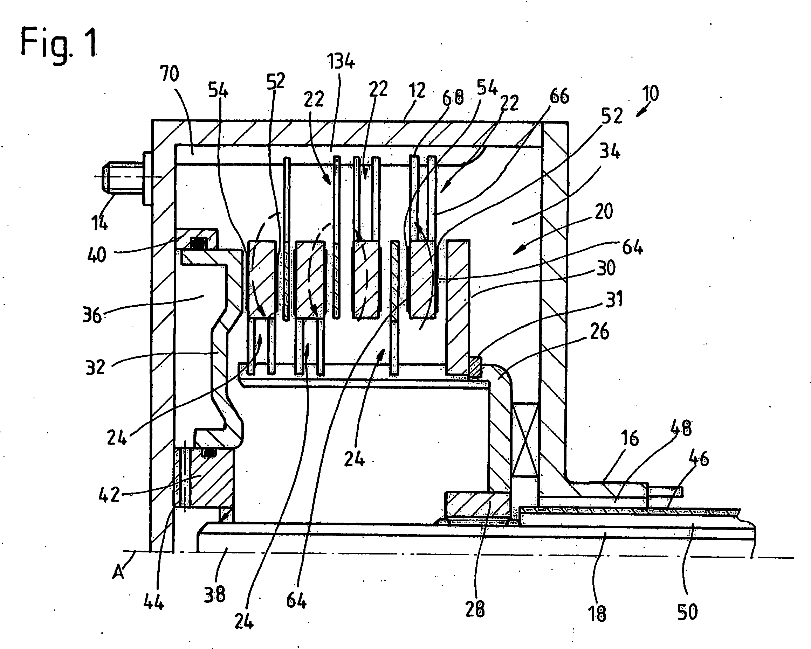

In Fig. 1 ist eine erfindungsgemäße Kupplungsanordnung allgemein mit 10 bezeichnet. Diese nasslaufende Kupplungsanordnung 10 umfasst eine Gehäuseanordnung 12, die über eine Mehrzahl von Befestigungsorganen und ein nicht dargestelltes Kopplungselement, wie z.B. Flexplatte, mit einer Antriebswelle, beispielsweise Kurbelwelle einer Brennkraftmaschine, zur gemeinsamen Drehung gekoppelt werden kann. An der von der Kopplung mit der Antriebswelle entfernt liegenden axialen Seite weist die Gehäuseanordnung 12 eine Gehäusenabe 16 auf, die beispielsweise in eine Getriebeanordnung (nicht dargestellt) eingreift und dort eine Fluidförderpumpe zur Drehung antreibt. Zur Gehäusenabe 16 konzentrisch angeordnet ist eine Abtriebswelle 18, die mit ihrem freien Ende in den Innenraum 20 der Gehäuseanordnung 12 ragt. Diese Abtriebswelle 18 kann beispielsweise eine Getriebeeingangswelle sein.

In der Gehäuseanordnung 12 ist eine Mehrzahl von ersten Reiborganen 22, welche mit der Gehäuseanordnung 12 zur gemeinsamen Drehung gekoppelt sind, vorgesehen. Weiter ist eine Mehrzahl von zweiten Reiborganen 24 vorgesehen, welche über ein Kopplungselement 26 und eine Abtriebsnabe 28 mit der Abtriebswelle 18 zur gemeinsamen Drehung gekoppelt sind. An dem Kopplungselement 26 ist ein Widerlagerelement 30 drehfest und zumindest in einer axialen Richtung durch einen Sicherungsring 31 feststehend vorgesehen. Zwischen diesem Widerlagerelement 30 und einem Kupplungskolben 32 liegen die ersten Reiborgane 22 und zweiten Reiborgane 24. Durch den Kupplungskolben 32 wird der Innenraum 20 der Gehäuseanordnung 12 in einen ersten Raumbereich 34, welcher die Reiborgane 22, 24 enthält, und einen zweiten Raumbereich 36 unterteilt. In den zweiten Raumbereich 36 ist über eine in der Abtriebswelle 18 vorgesehene Zentralöffnung 38 Fluid einleitbar. Um diesen zweiten Raumbereich 36 bezüglich des ersten Raumbereichs 34 abzudichten, ist der im Wesentlichen ringartig ausgebildete Kupplungskolben 32 radial außen und radial innen auf jeweiligen Lagerungselementen 40, 42 unter Zwischenlagerung von Dichtungselementen fluiddicht, jedoch axial verschiebbar aufgenommen. In dem radial inneren Lagerungselement 42 sind mehrere Fluidströmungskanäle 44 vorgesehen, welche die Zufuhr von Fluid in den Raumbereich 36 zulassen.

Auch in den ersten Raumbereich 34 kann Fluid eingeleitet werden bzw. es kann Fluid aus diesem abgeleitet werden. Zu diesem Zwecke ist beispielsweise in dem zwischen der Abtriebswelle 18 und der Gehäusenabe 16 gebildeten Raumbereich ein hohlzylindrisches Trennelement 46 vorgesehen, welches einen Strömungsraum 48 zwischen der Gehäusenabe 16 und sich selbst bildet und welches weiter einen Strömungsraumbereich 50 zwischen der Abtriebswelle 18 und sich selbst bildet. Es kann beispielsweise von der in der Getriebeanordnung vorgesehenen Fluidförderpumpe Arbeitsfluid durch den Strömungsraumbereich 48 in den Raumbereich 34 eingeleitet werden, so dass es am rechten Ende der Gehäuseanordnung 12 nach radial außen strömt. Das Fluid umströmt dann die Reiborgane 22, 24, tritt nach radial innen und wird über den Strömungsraumbereich 50 wieder abgezogen. Auf diese Art und Weise kann das, wie im Folgenden noch beschrieben, in der Gehäuseanordnung 12 erwärmte Fluid kontinuierlich ausgetauscht und durch kühleres Fluid ersetzt werden.

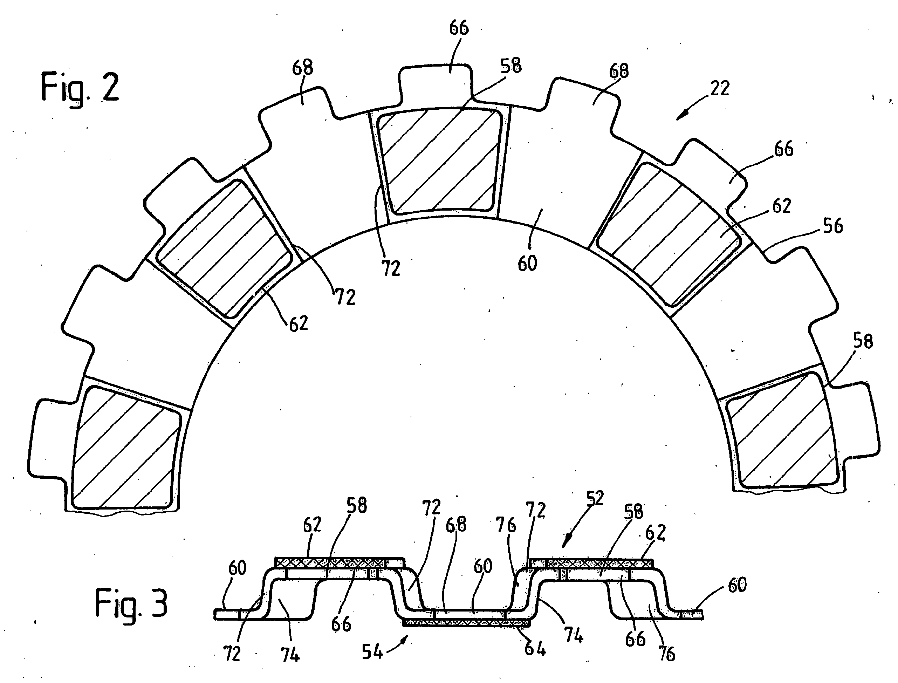

Zumindest ein Teil der ersten Reiborgane 22 und ein Teil der zweiten Reiborgane 24 trägt an seinen beiden axialen Seiten jeweils Reibbelaganordnungen 52, 54. Diesen Reibbelaganordnungen 52 bzw. 54 liegt dann jeweils ein weiteres Reiborgan zur reibmäßigen Wechselwirkung axial gegenüber. Die verschiedenen Reiborgane 22, 24 sind an der Gehäuseanordnung 12 bzw. dem Kopplungselement 26 durch axialverzahnungsartigen Eingriff drehfest und in Richtung der Drehachse A axial verlagerbar getragen. Der Aufbau eines derartigen mit Reibbelaganordnungen 52, 54 versehenen Reiborganes wird im Folgenden anhand der Figuren 2 und 3 mit Bezug auf ein erstes Reiborgan 22 beschrieben. Es sei darauf hingewiesen, dass der grundsätzliche Aufbau ebenso für die mit Reibbelaganordnungen 52, 54 versehenen zweiten Reiborgane 24 zutrifft.

Man erkennt in Fig. 2, dass dieses erste Reiborgan 22 einen Reibbelagträger 56 mit im Wesentlichen ringartiger Kontur aufweist. Bei Betrachtung von radial außen her erkennt man, dass der Reibbelagträger 56 mit ondulierter Struktur ausgebildet ist und zueinander in Richtung der Drehachse A versetzt liegende Belagtrageabschnitte 58, 60 aufweist. An ihren von einander axial abgewandt liegenden Seiten tragen die Belagtrageabschnitte 58, 60 jeweilige Belagsegmente 62 bzw. 64 der Reibbelaganordnungen 52, 54. Im Bereich von jedem der Belagtrageabschnitte 58, 60 ist radial außen ein Kopplungsvorsprung 66 bzw. 68 vorgesehen, durch welchen die drehfeste Ankopplung an entsprechende Kopplungsvorsprünge 70 der Gehäuseanordnung 12 erfolgt.

Man erkennt in Fig. 3 weiter, dass die axial zueinander versetzt liegenden Belagtrageabschnitte 58, 60 durch Verbindungsabschnitte 72 miteinander verbunden sind. Diese Verbindungsabschnitte 72 erstrecken sich, wie man auch in Fig. 2 erkennt, näherungsweise von radial innen nach radial außen und liegen im Wesentlichen in einer die Drehachse A enthaltenden Ebene. Beispielsweise können die jeweiligen Verbindungsabschnitte mit zu einer Umfangskreislinie tangential stehender Flächennormalen ausgebildet sein. An ihren in Umfangsrichtung weisenden Oberflächenbereichen bilden diese Verbindungsabschnitte 72 Fluidförderflächen 74, 76. Dabei wirken die Fluidförderflächen 74, 76 der ersten Reiborgane 22, welche mit der Gehäuseanordnung 12 zur gemeinsamen Drehung gekoppelt sind, beispielsweise bei einem Einkuppelvorgang, bei welchem die ersten Reiborgane 22 eine deutlich höhere Drehzahl aufweisen, als die zweiten Reiborgane 24, als Pumpenschaufelflächen und sorgen dafür, dass in ihrem Bereich eine nach radial außen geführte Fluidströmung erzeugt wird. In gleicher Weise wirken die an den zweiten Reiborganen 24 in entsprechender Weise bereitgestellten Fluidförderflächen als Turbinenschaufelflächen, welche auf Grund der vorhandenen Drehzahldifferenz zwischen den ersten Reiborganen 22 und den zweiten Reiborganen 24 für das durch die Fluidförderflächen 74, 76 der ersten Reiborgane 22 in Bewegung gesetzte Fluid zur Momentenabstützung dienen und dabei dieses Fluid nach radial innen leiten bzw. zur Förderung des Fluids nach radial innen dienen. Dieses vermittels der Fluidförderflächen der zweiten Reiborgane 24 nach radial innen geleitete bzw. geförderte Fluid ersetzt somit das durch die Fluidförderflächen 74, 76 der ersten Reiborgane 22 von radial innen nach radial außen geförderte Fluid. Es wird somit, wie durch strichlierte Pfeile in Fig. 1 eingezeichnet, eine Fluidzirkulation aufgebaut, die letztendlich der Fluidzirkulation entspricht, wie sie durch ein Pumpenrad und ein Turbinenrad eines hydrodynamischen Drehmomentwandlers oder einer Fluidkupplung erzeugt wird. Die bei der erfindungsgemäßen Kupplungsanordnung 10 erzeugte Fluidzirkulation führt dazu, dass unabhängig von dem angesprochenen Austausch des in der Gehäuseanordnung 12 vorhandenen Fluids, welcher Fluidaustausch beispielsweise mit einer Rate von 10 l/min erfolgen kann, eine permanente Fluidzirkulation und Umströmung der Reiborgane 22, 24 induziert wird, welche beispielsweise eine Umströmung dieser Reiborgane 22, 24 mit einer Flüssigkeitsmenge von 3000 l/min erzeugen kann. Auf diese Art und Weise kann die im Reib- oder Schlupfbetrieb in den verschiedenen Reiborganen 22, 24 erzeugte Reibwärme vor allem bei diese Reiborgane stark beanspruchenden Anfahrvorgängen deutlich besser im Fluid aufgenommen werden. Der erfindungsgemäß aufgebauten Fluidzirkulation ist der vergleichsweise langsame Fluidaustausch überlagert, so dass ständig das durch die Zirkulation auf vergleichsweise hohe Temperatur gebrachte Fluid zum Teil abgezogen wird und durch kühleres Fluid ersetzt wird.

Es sei hier darauf hingewiesen, dass selbstverständlich das in Fig. 1 dargestellte Prinzip der Erzeugung einer Fluidzirkulation unabhängig von der Anzahl an ersten Reiborganen bzw. zweiten Reiborganen bereitgestellt werden kann. Durch die in Fig. 1 dargestellte Positionierung, bei welcher zunächst die zur Fluidförderung ausgebildeten ersten Reiborgane 22 aufeinander folgend angeordnet sind, wobei jeweils ein im Wesentlichen plattenartig ausgebildetes zweites Reiborgan 24 zwischen diesen liegt, und dann nach einem Übergangsreiborgan 22, welches keine Reibbeläge trägt, die zur Fluidförderung ausgebildeten zweiten Reiborgane 24 folgen, zwischen welchen ein im Wesentlichen plattenartig ausgebildetes und nicht mit Reibbelägen versehenes erstes Reiborgan liegt, wird eine hinsichtlich der Gesamtheit der Reiborgane 22, 24 globale Fluidzirkulatin erzeugt. Durch gestaffeltes Anordnen von zur Fluidströmungserzeugung beitragenden ersten Reiborganen 22 und zur Fluidströmungserzeugung beitragenden zweiten Reiborganen 24 können mehrere lokale Fluidzirkulationsbereiche im Bereich der Reiborgane 22, 24 erzeugt werden. Auch ist es nicht zwingend erforderlich, die gleiche Anzahl an zur Fluiderzeugung ausgebildeten ersten Reiborgan 22 und zweiten Reiborgan 24 bereitzustellen. Beispielsweise können mehr als Pumpenräder oder Pumpenschaufeln wirksame erste Reiborgane 22 bereitgestellt werden.

Man erkennt des Weiteren, dass im axial zentralen Bereich zwei erste Reiborgane 22 aufeinander folgen, so dass eine nicht wirksame Reibflächenpaarung geschaffen ist. Dies kann beispielsweise dadurch vermieden werden, dass an den Reibbelagträgern der ersten Reiborgane 22 letztendlich keine Reibbeläge vorgesehen sind und dafür jedoch an allen zweiten Reiborganen 24, insbesondere auch dem in der Fig. 1 rechts erkennbaren plattenartigen zweiten Reiborgan 22, beidseits Reibbeläge vorgesehen sind. Im Sinne der vorliegenden Erfidung ist ein derartiger keine Reibbeläge tragender Reibflächenträger gleichwohl als Reibbelagträger insbesondere hinsichtlich des zur Fluidförderung relevanten Aufbaus zu betrachten.

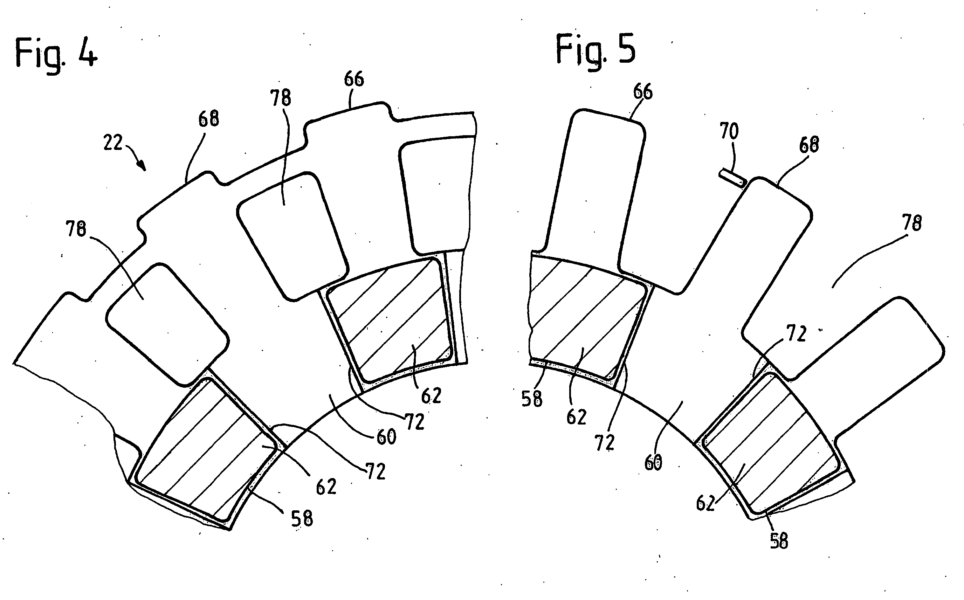

In Fig. 4 ist eine abgewandelte Ausgestaltungsform eines ersten Reiborgans 22 dargestellt. Man erkennt im Vergleich zur Ausgestaltungsform gemäß Fig. 2, dass die zur Drehkopplung dienenden und versetzt zueinander liegenden Vorsprünge 66, 68 radial weiter nach außen verlagert sind und dass zwischen den einzelnen Reibbelagsegementen der Reibbelaganordnungen jeweils im in Umfangsrichtung gelegenden Übergangsbereich zwischen den Belagtrageabschnitten 58, 60 Fluiddurchtrittsöffnungen 78 vorgesehen sind. Diese Fluiddurchtrittsöffnungen 78 ermöglichen die im Wesentlichen ungehinderte Fluidzirkulation. Bei der Ausgestaltungsform gemäß Fig. 5 sind diese Fluiddurchtrittsöffnungen 78 nach radial außen offen, so dass hier jeweils in radialer Richtung vergleichsweise langgestreckte Vorsprünge 66, 68 zur Ankopplung an die entsprechende Formation 70 der Gehäuseanordnung 12 bereitgestellt sind. Auch hier sind jeweils die verschiedenen Verbindungsabschnitte 72 zur Bereitstellung der in Fig. 3 erkennbaren Fluidförderflächen vorgesehen.

Es sei darauf hingewiesen, dass auch die Ausgestaltungsformen gemäß den Figuren 4 und 5 ebenso bei den mit der Abtriebswelle 18 gekoppelten zweiten Reiborganen 24 zur Anwendung kommen können, wobei dann die verschiedenen Öffnungen bzw. Kopplungsvorsprünge bezüglich des die Reibbelagsegmente tragenden Bereichs sich nach radial innen erstrecken.

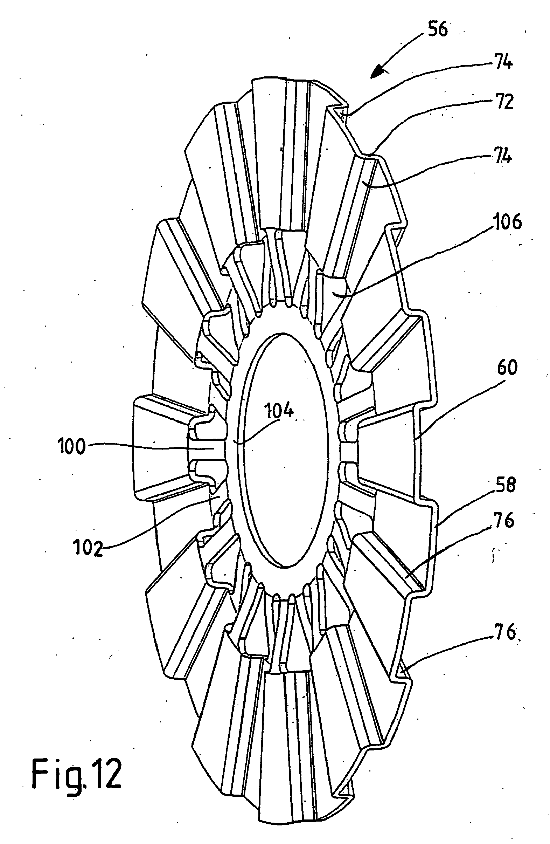

In den Fig. 12 - 15 sind verschiedene Ausgestaltungsvarianten von Reibbelagträgern 56 sowohl für die mit der Abtriebswelle 18 zu koppelnden zweiten Reiborgane 24 als auch für die mit der Gehäuseanordnung 12 zu koppelnden ersten Reiborgane 22 dargestellt. Man erkennt in Fig. 12 einen Reibbelagträger 56 für ein mit der Abtriebswelle 18 zu koppelndes Reiborgan 24. Dieser weist, wie vorangehend bereits beschrieben, die verschiedenen zueinander axial versetzten Belagtrageabschnitte 58, 60 auf, welche durch die Verbindungsabschnitte 72 miteinander gekoppelt sind. An den in Umfangsrichtung orientierten Oberflächen bilden die Verbindungsabschnitte 72 wiederum die Fluidförderflächen 74, 76. Von jedem der Belagtrageabschnitte 58, 60 geht nach radial innen ein Stegabschnitt 100, 102 aus. Diese münden in einen radial inneren ringartigen Abschnitt 104 ein, der an seiner Innenumfangsseite eine nicht dargestellte Verzahnung zur drehfesten Ankopplung an das Kopplungselement 26 aufweist. Da die Belagtrageabschnitte 58, 60 axial zueinander versetzt sind, verlaufen die von diesen jeweils ausgehenden Stegabschnitte 100, 102 in dem in Fig. 12 dargestellten Muster bezüglich der Drehachse A bzw. einer dazu orthogonalen Ebene geneigt. Zwischen den einzelnen Stegabschnitten 100, 102 sind jeweils Durchtrittsöffnungen 106 gebildet, durch welche das zur Zirkulation angeregte Fluid in axialer Richtung hindurchtreten kann.

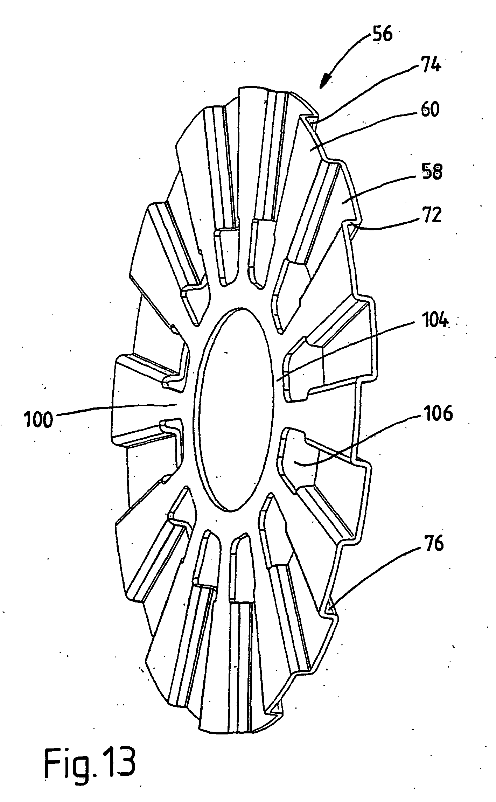

Bei der in Fig. 13 dargestellten Ausgestaltungsvariante gehen nur von einem Satz der Belagtrageabschnitte 58, 60, nämlich von den Belagtrageabschnitten 60, Stegabschnitte 100 aus. Die Belagtrageabschnitte 58 sind in ihrem radial inneren Bereich nicht direkt an den Ringabschnitt 104 angebunden. Daraus ergibt sich eine Konfiguration, bei welcher die Stegabschnitte 100 in der gleichen Ebene liegen können wie die Belagtrageabschnitte 60 und bei welcher des Weiteren aufgrund der halbierten Anzahl an Stegabschnitten, die dann etwas größere Breite aufweisen können, grundsätzlich die zwischen den einzelnen Stegabschnitten 100 gebildeten Öffnungen 106 eine größere Abmessung aufweisen.

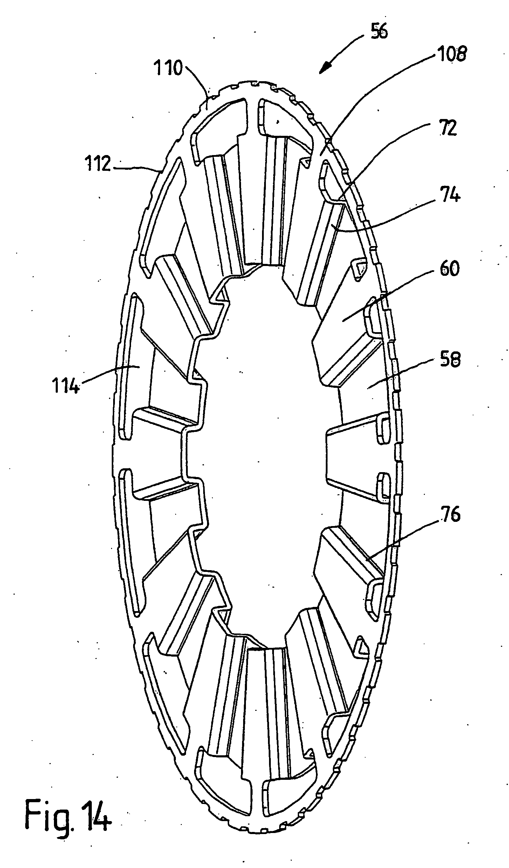

In Fig. 14 ist ein Reibbelagträger 56 für ein radial außen zu koppelndes Reiborgan, also beispielsweise ein an die Gehäuseanordnung 12 anzukoppelndes Reiborgan 22 dargestellt. Auch hier erkennt man wieder die axial zueinander versetzt liegenden Belagtrageabschnitte 58, 60 sowie die diese verbindenden Verbindungsabschnitte 72 mit den daran vorgesehenen Fluidförderflächen 74, 76. Axial außen schließen an die Belagtrageabschnitte 60 Stegabschnitte 108 an, die in einen äußeren Ringabschnitt 110 einmünden. Dieser weist eine Außenverzahnung 112 zur drehfesten Ankopplung beispielsweise an die Kopplungsvorsprünge 70 auf. Zwischen den einzelnen Stegabschnitten 108 sind in Umfangsrichtung wieder Öffnungen 114 bereitgestellt, durch welche das Fluid in axialer Richtung hindurchtreten kann. Es sei hier darauf hingewiesen, dass selbstverständlich auch oder zusätzlich von den Belagtrageabschnitten 58 Stegabschnitte nach radial außen abgehen können, so dass wieder die am Beispiel der Fig. 12 erkennbare geneigte Orientierung der verschiedenen Stegabschnitte vorgesehen ist.

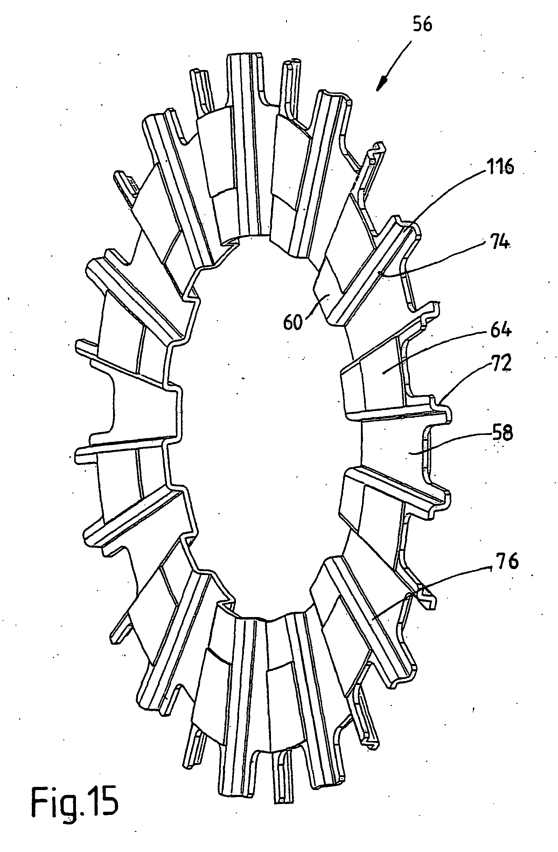

Bei der in Fig. 15 dargestellten Ausgestaltungsvariante sind im Übergangsbereich zwischen den Belagtrageabschnitten 60, 58 nach radial außen vorstehende Vorsprünge 116 ausgebildet. Da diese Vorsprünge 116 sich von den Belagtrageabschnitten 60 über die Verbindungsabschnitte 72 und die Belagtrageabschnitte 58 erstrecken, haben sie näherungsweise eine S-Kontur bzw. eine doppelt abgewinkelte Kontur und sind daher sehr steif und zur Übertragung großer Drehmomente geeignet.

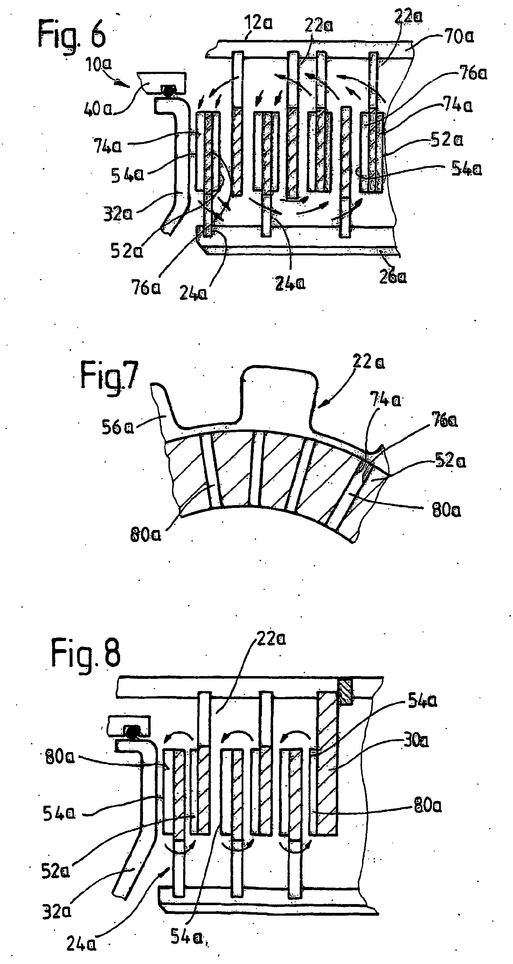

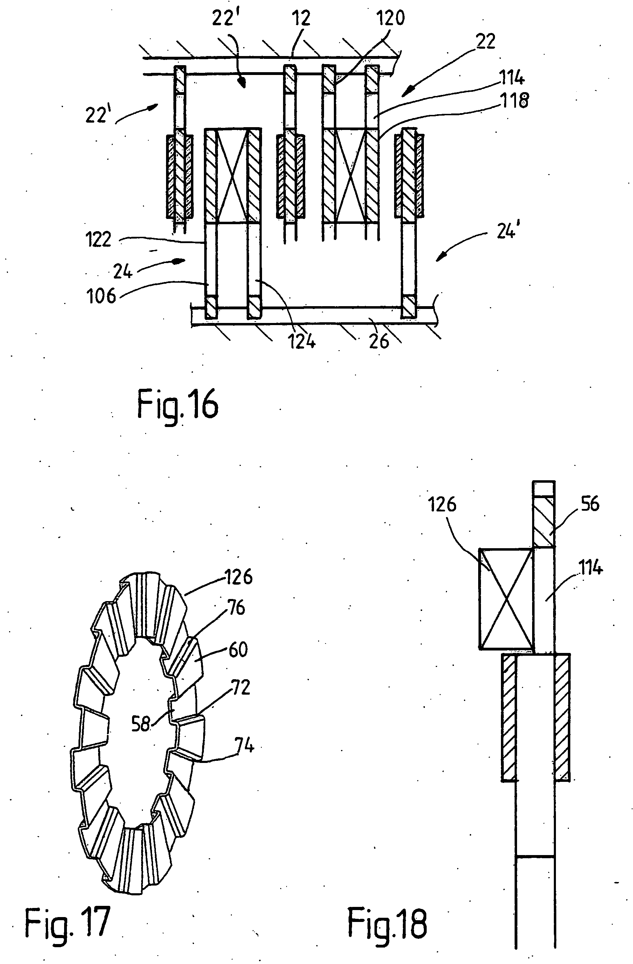

Eine weitere Abwandlung der vorangehend dargestellten Prinzipien ist in den Fig. 16 - 18 erkennbar. Bei dieser Ausgestaltungsform sind die verschiedenen Reiborgane jeweils aus mindestens einem ringscheibenartigen Blechelement aufgebaut. Die zur Fluidzirkulation beitragenden ersten bzw. zweiten Reiborgane 22, 24 umfassen jeweils zwei derartige nach Art herkömmlicher Lamellen ausgebildete Blechelemente 118, 120, 122, 124. Während die Blechelemente 118, 120 radial außen wieder die Öffnungen 114 zum axialen Fluiddurchtritt aufweisen, weisen die Blechelemente 122, 124 radial innen die Öffnungen 106 zum Fluiddurchtritt auf. Zwischen jeweils zwei dieser Blechelemente 118, 120, 122, 124 ist eine die Fluidförderflächen bereitstellende Anordnung eingesetzt. Diese kann beispielsweise das in Fig. 17 erkennbare Förderflächenelement 126 umfassen. Dieses weist wieder axial zueinander versetzte Abschnitte 58, 60 auf, welche in den vorangehend beschriebenen Varianten den Belagtrageabschnitten entsprechen und durch Verbindungsabschnitte 72 miteinander verbunden sind. Jeder dieser Verbindungsabschnitte 72 stellt an seinen beiden Umfangsseiten wieder die Fluidförderflächen 74, 76 bereit. Das Förderflächenelement 126 kann beispielsweise durch Verlöten, Verkleben o. dgl. mit den zugeordneten und beispielsweise stanztechnisch hergestellten Blechelementen 118, 120 bzw. 122, 124 fest verbunden werden. Es sei darauf hingewiesen, dass selbstverständlich auch andersartig, beispielsweise aus mehreren Teilen aufgebaute Förderflächenanordnungen hier vorgesehen sein können. Die nicht unmittelbar zur Fluidzirkulation beitragenden Reiborgane 22', 24' sind nach Art herkömmlicher Lamellen ausgebildet, d.h. umfassen ebenfalls ringscheibenartige Blechelemente o. dgl., die an ihren beiden axialen Seiten Reibbeläge tragen. Es sei darauf hingewiesen, dass selbstverständlich auch an den die Fluidzirkulation erzeugenden Reiborganen 22, 24 Reibbeläge vorgesehen sein können. Es können hier vor allem Reibbeläge mit an ihren Oberflächen vorgesehnenen kanalartigen Einsenkungen eingesetzt werden, so dass auch in diesen Oberflächenbereichen zur verbesserten Wärmeabfuhr Fluid strömen kann. Es wird des Weiteren noch darauf hingewiesen, dass bei der erfindungsgemäßen Kupplungsanordnung diejenigen Reiborgane, welche durch entsprechende Geometrie zur Erzeugung der Fluidzirkulation beitragen, nicht notwendigerweise auch die Reibbeläge tragen müssen. Beispielsweise kann das in Fig. 17 dargestellte Förderflächenelement ohne daran vorgesehene Reibbeläge in eine Kupplungsanordnung integriert werden, und beidseits davon können beispielsweise ringscheibenartig ausgebildete und in Umfangsrichtung beispielsweise durchgehende Reibbeläge tragende Gegenreiborgane vorgesehen sein. Auch ist es selbstverständlich möglich, bei einer Anordnung, wie sie im Folgenden noch mit Bezug auf die Fig. 6 - 11 beschrieben wird, Oberflächenkanäle in beispielsweise aus Blech aufgebaute Reiborgane einzubringen und an entsprechenden Gegenreiborganen dann in Umfangsrichtung entweder durchgehende oder beispielsweise ebenfalls Oberflächenkanäle aufweisende Reibbeläge vorzusehen.

Die in den Fig. 16 und 17 erkennbare Ausgestaltung ist aufgrund des Einsatzes von Standardbauteilen einfach herstellbar und somit auch kostengünstig. Um bei einer erfindungsgemäßen Kupplungsanordnung die Fluidzirkulation noch weiter zu verstärken, kann vorgesehen sein, dass an den verschiedenen aus Blech gebildeten Bauteilen, beispielsweise den vorangehend beschriebenen Belagträgern 56, nicht nur die den Fluiddurchtritt gestattenden Öffnungen oder Ausnehmungen radial außerhalb oder radial innerhalb der Reibbeläge vorgesehen sind, sondern zusätzliche Förder- oder Schaufelflächen bereitgestellt sind. Dies kann, wie im Beispiel der Fig. 18 erkennbar, beispielsweise dadurch geschehen, dass beim Bilden einer radial außen liegenden Öffnung 114 das Blechteil nicht vollständig gestanzt wird, sondern ein U-förmiger Stanzschnitt gebildet wird und auf diese Art und Weise dann ein seitlich oder schräg abgebogener Lappen 127 erzeugt wird. Mehrere derartige in Umfangsrichtung aufeinander folgende Lappen wirken nach Art von Förderschaufeln und verstärken die durch die vorangehend beschriebenen erfindungsgemäßen Maßnahmen ohnehin bereits bereitgestellte Zirkulation. Der Winkel, mit welchem diese Lappen 127 bezüglich einer zur Drehachse A im Wesentlichen orthogonalen Ebene abgebogen sind, liegt vorzugsweise im Bereich von etwa 90°, kann jedoch auch im Winkelbereich von 15 -165° liegen.

Eine abgewandelte Ausgestaltungsform der erfindungsgemäßen Kupplungsanordnung ist in Fig. 6 dargestellt. Komponenten, welche vorangehend beschriebenen Komponenten entsprechen, sind mit dem gleichen Bezugszeichen unter Hinzufügung eines Anhangs "a" bezeichnet. Im Folgenden wird lediglich auf die wesentlichen konstruktionsmäßigen und funktionalen Unterschiede eingegangen.

Bei der Ausgestaltungsform gemäß Fig. 6 sind an den die Fluidzirkulation induzierenden ersten bzw. zweiten Reiborganen 22a, 24a an beiden Seiten wieder Reibbelaganordnungen 52a, 54a in Form von beispielsweise ringartig ausgebildeten Reibbelägen bereitgestellt. Wie man beispielsweise in Fig. 7 anhand eines ersten Reiborgans 22a bzw. des daran vorgesehenen Reibbelags 52a erkennt, weist dieser beispielsweise durch Stanzen oder Prägen eingebracht eine Mehrzahl von sich vorzugsweise im Wesentlichen radial erstreckenden Fluidströmungskanälen 80a auf. Jeder dieser Fluidströmungskanäle 80a ist in Umfangsrichtung durch nunmehr die Fluidförderflächen 74a, 76a bereitstellende Wandungen begrenzt. Dabei übernehmen diejenigen Fluidförderflächen 74a, 76a, welche an den mit der Gehäuseanordnung 12a drehbaren ersten Reiborganen 22a vorgesehen sind, im Schlupfbetrieb wieder die Funktion der Pumpenschaufelflächen, während die entsprechenden Fluidförderflächen an den zweiten Reiborganen 24a wieder die Funktion der Turbinenschaufelflächen bereitstellen. Bei dieser Ausgestaltungsform sind die Reibbelagträger 56a als im Wesentlichen eben ausgebildete Blechteile bereitgestellt. Man erkennt auch hier, dass zwischen zwei die Fluidzirkulation induzierenden ersten Reiborganen 22a bzw. zweiten Reiborganen 24a jeweils wiederum ein zweites Reiborgan bzw. erstes Reiborgan liegt, an dem keine Reibbeläge vorgesehen sind.

Um die auch in Fig. 6 erkennbare Blindreibfläche zwischen zwei unmittelbar benachbart liegenden ersten Reiborganen 22a zu vermeiden, kann eine Anordnung vorgesehen sein, wie sie in Fig. 8 gezeigt ist. Man erkennt hier, dass jeweils an nur einer axialen Seite der ersten Reiborgane 22a und der zweiten Reiborgane 24a ein Reibbelag 52a (im Falle der ersten Reiborgane 22a) bzw. 54a (im Falle der zweiten Reiborgane 24a) vorgesehen ist. Jeder dieser Reibbeläge 52a, 54a weist wieder die angesprochenen Kanäle 80a auf. Auch das Widerlagerelement 30a kann einen derartigen Reibbelag 54a mit Kanälen 80a tragen. Es werden bei dieser Ausgestaltungsform dann die vorangehend bereits angesprochenen lokalen Zirkulationen erzeugt. Während die in Fig. 8 dargestellte Ausgestaltungsform auf Grund des Vermeidens einer nicht wirksamen Blindreibfläche ein verbessertes Drehmomentübertragungsvermögen bei gleicher Anzahl an Reiborganen aufweist, wird durch die mehreren lokalen Zirkulationen ein geringfügig verringerter Volumenstrom im Vergleich zu dem globalen Zirkulationsstrom der Fig. 6 erreicht. Auch wird eine axial sehr kompaktbauende Ausgestaltungsform erhalten. Sowohl die in Fig. 6 als auch die in Fig. 8 dargestellte Ausgestaltungsform weist den Vorteil auf, dass ein äußerst einfach herzustellender konstruktiver Aufbau vorhanden ist. Man erkennt vor allem, dass auf Grund des Wegfalls der Verbindungsabschnitte der Ausgestaltungsform gemäß Fig. 1 eine deutlich geringere axiale Baugröße erreicht wird, wenngleich insgesamt die im Bereich der Reibbelaganordnungen bereitgestellten Fluidförderflächen eine geringere Gesamtoberfläche bereitstellen und somit auch eine verminderte Fördereffizienz vorliegt. Um dem entgegenzuwirken, sollte unter Ausnutzung des zur Verfügung stehenden axialen Bauraums die Dicke der verschiedenen Reibbeläge bzw. die Tiefe der darin eingebrachten Nuten so groß als möglich sein.

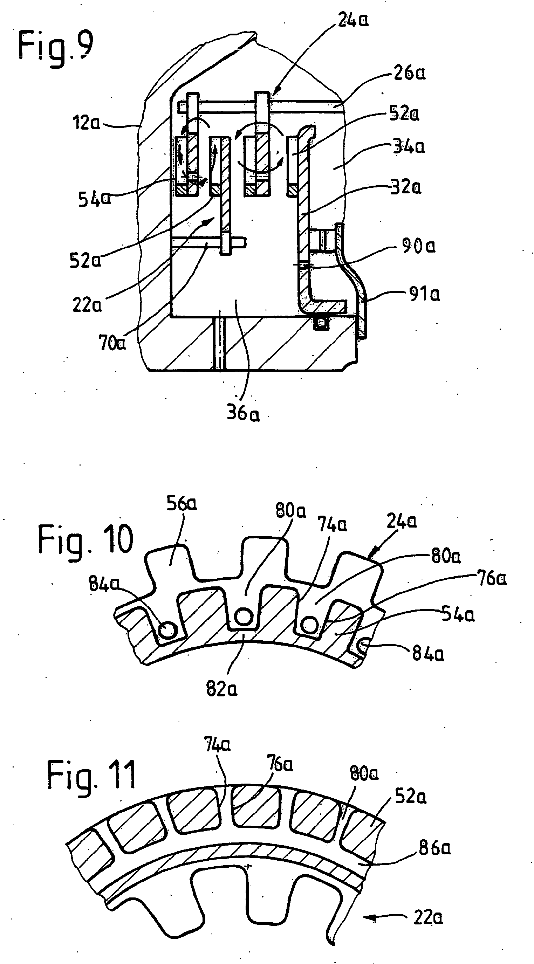

Eine weitere Abwandlung des Fluidförderflächen im Bereich von Reibbelägen einsetzenden Erfindungsprinzips ist in Fig. 9 dargestellt. Auch hier sind mehrere erste Reiborgane 22a und wenigstens ein zweites Reiborgan 24a in axial gestaffelter Anordnung vorgesehen. Die ersten Reiborgane 22a und die zweiten Reiborgane 24a tragen wieder an einer axialen Seite die Reibbeläge bzw. Reibbelaganordnungen 52a, 54a. In Abwandlung zu den vorangehend dargestellten Ausgestaltungsformen sind die zweiten Reiborgane 24a, welche über das Kopplungselement 26a an die Abtriebswelle angekoppelt sind, nunmehr als sogenannte Außenlamellen ausgebildet, d.h. ihre Drehmitnahmevorsprünge greifen nach radial außen. Die ersten Reiborgane 22a sind als sogenannte Innenlamellen ausgebildet und weisen innen liegende Drehkopplungsvorsprünge zum Eingriff mit entsprechenden Formationen 70a an der Gehäuseanordnung 12a auf. Auch ist hier ein System des Zweileitungsprinzips dargestellt, bei welchem zur Herstellung des eingekuppelten Zustands im ersten Raumbereich 34a durch vermehrte Fluidzufuhr der Fluiddruck gegenüber dem Fluiddruck im zweiten Raumbereich 36a erhöht wird. Der Kupplungskolben 32a wird somit axial gegen die Reiborgane 22a bzw. 24a gepresst. Im Kupplungskolben 32a ist wenigstens eine Durchtrittsöffnung 90a vorgesehen, welche auch bei eingekuppelter Kupplungsanordnung 10a einen Fluidaustausch ermöglicht. Der Kupplungskolben 32a ist über eine Drehkopplungsanordnung 91 a mit der Gehäuseanordnung 12a drehfest gekoppelt, bezüglich dieser jedoch axial bewegbar. In diesem Falle ist also der Kupplungskolben 32a auch als mit der Gehäuseanordnung 12a drehbares erstes Reiborgan zu betrachten, welches letztendlich auch einen Reibbelag 52a trägt.

In Fig. 10 ist eine Teil-Axialansicht eines zweiten Reiborgans 24a erkennbar. Man sieht, dass der daran vorgesehene Reibbelag 54a nach radial innen hin abgeschlossene Nuten oder Kanäle 80a aufweist. Es bleibt ein radial innerer ringartiger Abschnitt 82a bestehen. Im radial inneren Endbereich der Kanäle 80a sind in dem Reibbelagträger 56a Durchtrittsöffnungen 84a vorgesehen. Die Reibbeläge 52a der in Fig. 11 erkennbaren ersten Reiborgane 22a weisen ebenfalls eine Mehrzahl von nach radial innen hin begrenzten Kanälen 80a auf, die in ihrem radial inneren Endbereich in einen ringartigen Kanalbereich 86a einmünden. Dieser ringartige Kanalbereich 86a liegt den Durchtrittsöffnungen 84a gegenüber. Ebenso wie bei den vorangehend beschriebenen Ausgestaltungsformen bilden die die Kanäle 80a begrenzenden Seitenwandungen jeweilige Fluidförderflächen 74a, 76a. Im Falle der mit der Gehäuseanordnung 12a drehbaren ersten Reiborgane 22a wirken diese Fluidförderflächen 74a, 76a wiederum als das Fluid nach radial außen fördernden Schaufelflächen, während die an den zweiten Reiborganen 24 bereitgestellten Fluidförderflächen 74a, 76a die Fluidströmung nach radial innen unterstützen und zur Momentenabstützung dienen. Bei den in Fig. 9 dargestellten Ausgestaltungsvarianten werden wieder lokale Zirkulationen erzeugt, die sich jeweils über einen Belagträger eines zweiten Reiborgans 24a, einen Reibbelag 54a eines zweiten Reiborgans 24a und einen Reibbelag 52a eines ersten Reiborgans 22a erstrecken. Es sei darauf hingewiesen, dass in dieser Ausgestaltungsform das Kopplungselement 26a, welches radial außerhalb der verschiedenen Reibbeläge 52a, 54a liegt, eine Funktion zum Unterstützen der Umlenkung der Fluidzirkulation im radial äußeren Bereich übernimmt, während in den vorangehend beschriebenen Ausgestaltungsformen dieses Kopplungselement eine entsprechende Umlenkung der Fluidzirkulation im radial inneren Bereich bereitgestellt hat. Die Umlenkung im radial äußeren Bereich erfolgt dort durch die radial außen liegenden Abschnitte der Gehäuseanordnung. Insbesondere mit Bezug auf die in den Fig. 6 - 11 dargestellten Ausgestaltungsformen sei darauf hingewiesen, dass derartige Reiborgane selbstverständlich nicht notwendigerweise aus einem separaten Trägerelement und daran beispielsweise durch Verklebung festgemachten separaten Reibbelägen bestehen müssen. Vielmehr können hier auch beispielsweise aus Faserverbundwerkstoff, z. B. Kohlefaserverbund, einteilig aufgebaute Reiborgane bereitgestellt werden, die in ihrer Geometrie dann beliebig ausgestaltet werden können, die aber auch beispielsweise so wie die in Fig. 8 erkennbaren Reiborgane ausgebildet sein können. Diese Reiborgane weisen dann an ihren axialen Seiten im Sinne der vorliegenden Erfindung Reibbeläge oder Reibbelagabschnitte auf, die mit einem zur Anbindung an die Gehäuseanordnung bzw. die Abtriebswelle ausgebildeten Körperbereich einteilig ausgebildet sind. Selbstverständlich ist es auch bei derartigen Reiborganen, bei welchen die Reibbeläge oder Reibbelagabschnitte also integral und aus dem gleichen Werkstoff ausgebildet sind, wie die zur Anbindung an andere Komponenten ausgestalteten Körperbereiche, möglich, eine mäanderartige Struktur bereitzustellen, wie sie beispielsweise in Fig. 17 erkennbar ist.

Die vorangehend beschriebenen und auch die nachfolgend noch beschriebenen Ausgestaltungsformen, insbesondere die in Fig. 9 dargestellte Ausgestaltungsform, eignen sich auch als Kupplungsanordnung bei einem hydrodynamischen Drehmomentwandler oder einer Fluidkupplung, also als sogenannte Überbrückungskupplungsanordnung. Auch dort wird bei Herstellung des Überbrückungszustands ein erheblicher Teil des eingeleiteten Drehmomentes in Reibwärme umgesetzt, die durch die erfindungsgemäß induzierte Zirkulation dann schnell abgeführt werden kann. Von wesentlichem Vorteil bei allen erfindungsgemäßen Ausgestaltungsformen ist, dass die im Rahmen der Fluidzirkulation geförderte Fluidmenge mit zunehmender Drehzahldifferenz zwischen den verschiedenen reibend aneinander anliegenden und als Pumpen bzw. Turbinen wirksamen Reiborganen zunimmt. D.h. insbesondere dann, wenn eine starke Reibbelastung vorliegt, also wenn ein großer Schlupf vorhanden ist, wird eine große Fluidmenge durch die Fluidzirkulation umgewälzt mit der Folge einer deutlich verbesserten Abfuhr der durch Reibung erzeugten Wärme. Durch die im Bereich der verschiedenen reibend wirksam werdenden Oberflächenbereiche selbst erzeugte Fluidzirkulation wird gewährleistet, dass letztendlich zu allen thermisch beaufschlagten Oberflächenbereichen sehr schnell Fluid gefördert werden kann und Wärme von dort abgeführt werden kann.

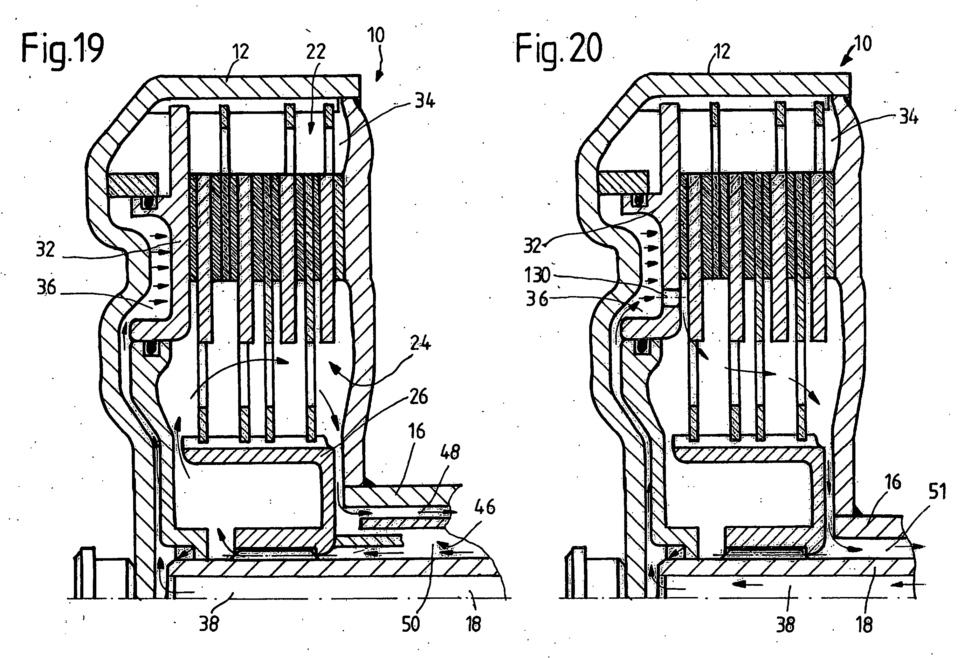

Im Folgenden werden die verschiedenen Möglichkeiten der der erfindungsgemäßen Fluidzirkulation überlagerten oder überlagerbaren Fluidströmung dargestellt. So zeigt die Fig. 19 allgemein eine erfindungsgemäße Kupplungsanordnung 10, bei welcher die Fluidzufuhr bzw. -abfuhr nach Art eines 3-Leitungssystems erfolgt. Während in den Raumbereich 36 zur axialen Verlagerung des Kupplungskolbens 32 über die zentrale Öffnung 38 der Abtriebswelle 18 Fluid eingeleitet bzw. von dort wieder abgeleitet wird, wird über eine im Wesentlichen den Strömungsraumbereich 50 umfassende weitere Leitung in den Raumbereich 34 Fluid eingeleitet. Über eine weitere den Strömungsraumbereich 48 umfassende Leitung kann das Fluid wieder aus dem Raumbereich 34 abgezogen werden. Es sei darauf hingewiesen, dass in der Darstellung der Fig. 19 das Trennelement 46 nach Art einer labyrinthartigen Dichtung wirksam ist und zwei grundsätzlich bezüglich einander drehbare Dichtelemente umfassen kann. Der Vorteil dieser Anordnung ist, dass der Vorgang des Ein- und Ausrückens völlig unabhängig gemacht werden kann von irgendwelchen Druckzuständen im Raumbereich 34. Es lässt sich somit eine hervorragende Wärmeabfuhr erhalten, die vom Getriebe aus regelbar ist. Auch lässt sich eine sehr präzise Verlagerung des Kupplungskolbens 32 erreichen.

Die Ausgestaltungsform gemäß Fig. 20 wirkt nach dem sogenannten 2-Leitungsprinzip. Das Fluid wird in die Gehäuseanordnung 12 über die zentrale Öffnung 38 der Abtriebswelle 18 eingespeist, und zwar in den Raumbereich 36. Über eine oder mehrere Öffnungen 130 im Kupplungskolben 32 tritt das Fluid unter Bereitstellung einer Drosselwirkung in den Raumbereich 34 ein und kann über einen zwischen der Nabe 16 und der Abtriebswelle 18 bereitgestellten Raumbereich 51 wieder abströmen. Zum Einrücken dieser Kupplungsanordnung 10 wird also verstärkt Fluid in den Raumbereich 36 eingespeist. Aufgrund der Erhöhung des Fluiddrucks in diesem Raumbereich 36 wird der Kupplungskolben 32 dann gegen die Reiborgane gepresst. Hier ist es zum Erhalt eines schnelleren Ausrückvorganges möglich, die Fluidströmungsrichtung umzukehren. Durch das Bereitstellen der wenigstens einen Öffnung 130 ist auch hier im eingerückten Zustand permanent ein Fluidaustausch und eine dementsprechende Wärmeabfuhr möglich. Obgleich die gewünschte Fluidleckage (erzeugt durch die Öffnung oder Öffnungen 130) einen verminderten Wirkungsgrad zur Folge hat, da permanent Öl nachgespeist werden muss, ist bei geringem Bauaufwand ein permanenter Fluidaustausch möglich.

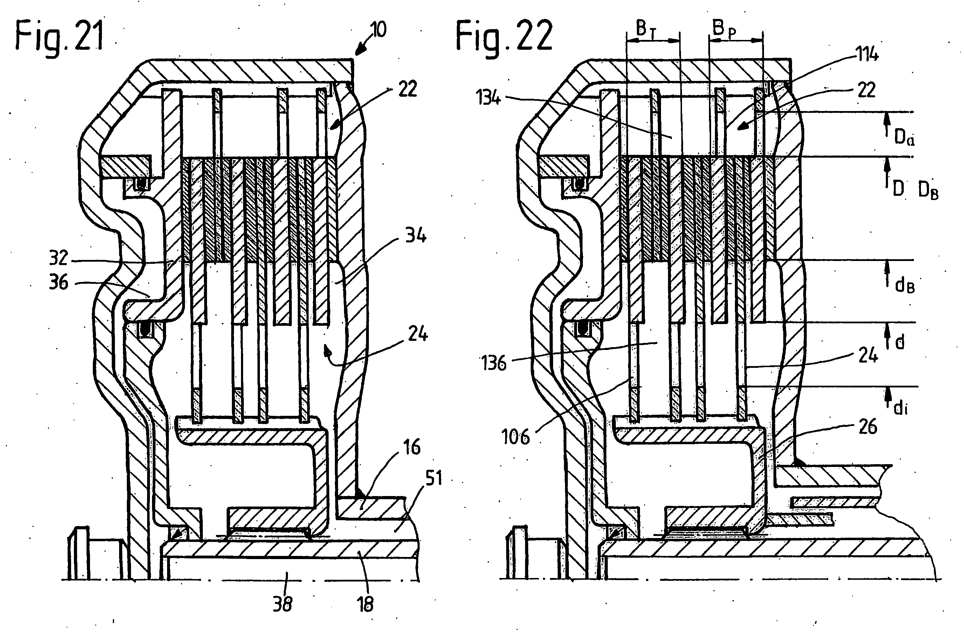

Die in Fig. 21 dargestellte Ausgestaltungsvariante entspricht im Wesentlichen der in Fig. 20 dargestellten Ausgestaltungsvariante, bei welcher Fluid über die zentrale Öffnung 38 der Abtriebswelle 18 in den Raumbereich 36 eingespeist wird. Im Kupplungskolben 32 ist jedoch keine Durchtrittsöffnung vorgesehen. Es besteht also keine direkte Fluidaustauschverbindung zwischen den beiden Raumbereichen 34, 36. Der Raumbereich 34 ist bei dieser Variante mit Fluid vorbefüllt. Die Wärmeabfuhr aus den reibmäßig beaufschlagten Bereichen erfolgt hier lediglich durch die erfindungsgemäß aufgebaute Fluidzirkulation im Bereich der verschiedenen Reiborgane. Ein Fluidaustausch, durch welchen Fluid aus dem Raumbereich 34 abgeführt wird, ist nicht vorhanden. Um hier die durch Verschiebung des Kupplungskolbens 32 induzierte Volumenänderung des Raumbereichs 34 kompensieren zu können, wird dieser nicht vollständig mit dem Arbeitsfluid, also einer ölartigen Flüssigkeit o. dgl., gefüllt, so dass ein komprimierbares Gasvolumen verbleibt.

In Fig. 22 sind verschiedene Abmessungen dargestellt, welche zum Erhalt einer effizienten Fluidzirkulation in bestimmten Bereichen liegen sollten. So ist es beispielsweise vorteilhaft, wenn das Verhältnis des Innendurchmessers zum Außendurchmesser der die Fluidzirkulation letztendlich erzeugenden Fluidförderflächen, also das Verhältnis d/D im Bereich von 0,35 - 0,85, vorzugsweise bei etwa 0,6, liegt. Die Anzahl der wirksamen Fluidförderflächen sollte im Bereich von 6 - 48, vorzugsweise bei etwa 24, liegen. Für die Reibbeläge hat es sich als vorteilhaft erwiesen, wenn deren Durchmesserverhältnis d_{B}/D_{B} im Bereich von 0,6 - 0,9, vorzugsweise bei etwa 0,75, liegt.

Durch das Bereitstellen der vorangehend angesprochenen verschiedenen radial außen bzw. innen vorgesehenen Öffnungen 114, 106 bzw. Durchtrittsaussparungen zwischen jeweiligen Kopplungsvorsprüngen werden die vorangehend bereits angesprochenen radial äußeren bzw. radial inneren Fluidströmungsräume 134, 136 gebildet. Diese können nach radial außen bzw. radial innen durch die verschiedenen vorangehend angesprochenen Ringabschnitte der Reibbelagträger 56 gebildet sein, können jedoch, wie beispielsweise in Fig. 1 auch erkennbar, unmittelbar durch die Gehäuseanordnung 12 bzw. das Kopplungselement 26 begrenzt sein. Für diese radial äußeren bzw. radial inneren Fluidströmungsräume, in welchen das Fluid näherungsweise in Achsrichtung strömt, hat es sich als vorteilhaft erwiesen, als Verhältnis zur Außenabmessung der Fluidförderflächen, also Verhältnis Dₐ/D, einen Wert im Bereich von 1,03 - 1,2, vorzugsweise etwa 1,1, vorzusehen, bzw. als Verhältnis zum Innendurchmesser der Fluidförderflächen, also als Verhältnis dᵢ/d einen Wert im Bereich von 0,4 - 0,9, vorzugsweise etwa 0,7 vorzusehen. Ferner ist es vorteilhaft, wenn das Verhältnis der Axialerstreckung der nach Art einer Pumpe wirkenden Reiborgane, welche näherungsweise durch die Abmessung B_{P} in Fig. 22 ausgedrückt ist, zur Axialerstreckung der nach Art einer Turbine wirksamen Reiborgane, in Fig. 22 näherungsweise durch die Erstreckung B_{P} ausgedrückt, im Bereich von 0,5 - 1,2, vorzugsweise etwa bei 1, liegt. Es sei hier darauf hingewiesen, dass in Fig. 22 insofern eine geringe Ungenauigkeit besteht, als zwischen zwei nach Art einer Pumpe wirksamen Reiborganen 22 ein radial innen mit dem Kopplungselement 26 drehfest gekoppeltes Reiborgan 24 liegt, das jedoch zur Fluidzirkulationserzeugung nicht beiträgt. Entsprechendes gilt auch für den.turbinenmäßig wirksamen Bereich.

Weiter hat es sich als vorteilhaft, jedoch nicht als zwingend, herausgestellt, wenn, wie in Fig. 22 dargestellt, die Reibbeläge radial außen im gleichen Bereich enden, wie die Fluidförderflächen an den verschiedenen Belagträgern.

Es sei darauf hingewiesen, dass die vorangehend mit Bezug auf die Fig. 19 - 22 beschriebenen Details davon unabhängig sind, in welcher Art und Weise die die Fluidzirkulation erzeugenden Fluidförderflächen ausgebildet sind, also unabhängig davon sind, ob diese an Belagträgern oder an Stirn- oder Seitenflächen von Belägen selbst ausgebildet sind. Insofern treffen die mit Bezug auf die Fig. 19 - 22 vorgebrachten Aussagen ebenso auf die Ausgestaltungsformen gemäß den Fig. 6 - 11 zu.

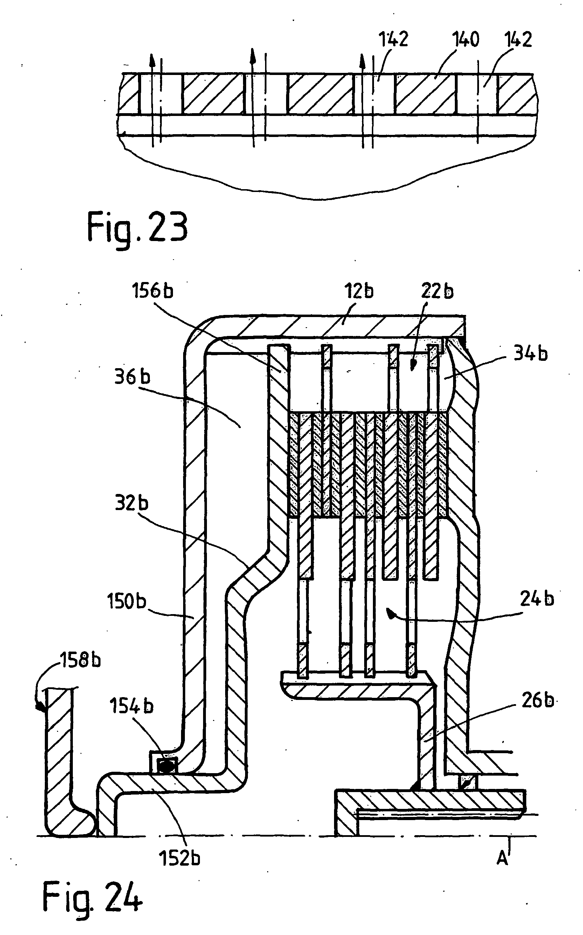

Eine weitere vorteilhafte Variante ist in Fig. 23 angedeutet. Wie vorangehend bereits mit Bezug auf die Fig. 19 - 21 ausgeführt, wird durch verschiedene Strömungen bzw. Vorbefüllung dafür gesorgt, dass im Bereich der reibend aneinander anliegenden oder in Wechselwirkung bringbaren Oberflächenbereiche Arbeitsfluid vorhanden ist, um durch Fluidströmung oder/und Fluidzirkulation Wärme abzuführen. In einem Zustand, in welchem die Kupplung 10 nicht eingerückt ist, ist diese Funktion der Wärmeabfuhr jedoch nicht erforderlich. Da dann noch vorhandene Arbeitsfluid hat den Aufbau von Schleppmomenten zur Folge, was beispielsweise dann nachteilhaft ist, wenn die erfindungsgemäße Kupplung als Teil einer Doppelkupplung wirksam ist. In diesem Falle soll über nur jeweils eine der Kupplungen ein Drehmoment übertragen werden. Gemäß der in Fig. 23 dargestellten Variante wird nun dafür gesorgt, dass nur dann, wenn ein Drehmoment zu übertragen ist, der die reibend beaufschlagten Oberflächenbereiche enthaltende Volumenbereich mit Arbeitsfluid befüllt ist. Dies kann beispielsweise **dadurch** erfangt werden, dass fü**r** die an die Gehäuseanordnung 12 drehfest angekoppelten Reiborgane ein von der Gehäuseanordnung 12 separat ausgebildetes Kopplungselement 140 vorgesehen ist, das beispielsweise mit der Gehäuseanordnung 140 drehfest verbunden ist. Dieses Kopplungselement 140 weist mehrere Durchtrittsöffnungen 142 auf, durch welche von radial innen nach radial außen Fluid strömen kann. Im Betrieb wird dafür gesorgt, dass dann, wenn die Kupplung in einen eingerückten Zustand gebracht werden soll, Fluid in den Raumbereich 34 geleitet wird, und zwar beispielsweise mit einer Förderrate von etwa 20 L/min. Dieses Fluid wird fliehkraftbedingt nach radial außen strömen und aufgrund der Drosselwirkung der Öffnungen 142 sich verstärkt in dem von dem Kopplungselement 140 umgebenen Volumenbereich ansammeln. Dort nimmt es Wärme von den reibend aneinander anliegenden Bauteilen auf und führt die Wärme dann nach dem Durchtritt durch die Öffnungen 142 und dem Abzug aus dem Raumbereich 34 ab. Soll die Kupplung wieder in einen ausgerückten Zustand gebracht werden, so wird die Fluidzufuhr gestoppt, das zunächst noch vorhandene Fluid wird über die Öffnungen 142 hindurchtreten und dann abgezogen werden. Es ist dann keine fluidbedingte Schleppwirkung mehr vorhanden. Eine derartige Ausgestaltung ist selbstverständlich auch bei der in Fig. 9 dargestellten Variante möglich, bei welcher die an die Abtriebswelle angebundenen Reiborgane 24a an das die verschiedenen Reiborgane 24a, 22a radial außen umgebende Kopplungsorgan 26a angebunden sind.

Auch hier ist es wieder unerheblich, in welcher Art und Weise die Fluidförderflächen bereitgestellt werden, so dass auch dieser Aspekt der vorliegenden Erfindung grundsätzlich bei allen vorangehend beschriebenen Ausgestaltungsvarianten zum Einsatz kommen kann.

Eine weitere erfindungsgemäße Kupplungsanordnung ist in Fig. 24 dargestellt. Diese entspricht insbesondere hinsichtlich der Erzeugung der Fluidzirkulation den vorangehend beschriebenen Prinzipien und kann, insofern als die Reiborgane betroffen sind, so ausgebildet sein, wie vorangehend mit Bezug auf verschiedene Ausgestaltungsvarianten beschrieben.

Man erkennt bei der in Fig. 24 dargestellten Ausgestaltungsvariante, dass der dem Kupplungskolben 32b gegenüber liegende und nach radial innen sich erstreckende Gehäuseabschnitt 150b radial innen eine zur Drehachse A vorzugsweise konzentrische Öffnung aufweist. Durch diese hindurch ist eine axiale, im Wesentlichen zylindrisch sich erstreckende durch Umformung gebildete Ausformung 152b des Kupplungskolbens 32 unter Bereitstellung einer Dichtwirkung eines Dichtelements 154b geführt. Der die Raumbereiche 34b, 36b umfassende gesamte Innenraum des Gehäuses 12b ist somit fluiddicht abgeschlossen und mit Fluid vorbefüllt. Die beiden Raumbereiche 34b, 36b stehen radial außen in direkter Verbindung, da dort der Kupplungskolben 32b durch eine an diesem vorgesehene Verzahnungsanordnung 156b ebenso wie die Reiborgane 22b drehfest an die Gehäuseanordnung 12b angebunden ist. Für den Kupplungskolben 32b ist ein allgemein mit 158b bezeichneter Betätigungsmechanismus vorgesehen. Dieser kann beispielsweise nach Art eines herkömmlichen Kolben/Zylinder-Betätigungsmechanismus zur Betätigung von Reibungskupplungen, nach Art eines Kraftspeichers, beispielsweise Membranfeder, oder sonstigen Aktuators ausgebildet sein. Der Mechanismus 158b beaufschlagt den aus der Gehäuseanordnung 12b hervorspringenden Bereich 152b des Kupplungskolbens 32b und presst diesen somit zur Herstellung des Einkuppetzustands gegen die verschiedenen Reiborgane 22b, 24b. Es sind hier also keine zur Herstellung des Einkuppelzustands dienende Fluidleitungen erforderlich, was vor allem in fluidführungstechnischer Hinsicht den Aufbau wesentlich vereinfacht. Um in definierter Art und Weise den Kupplungskolben beim Übergang in den Ausrückzustand von den Reiborganen wegzubewegen, könnte daran gedacht werden, entweder innerhalb der Gehäuseanordnung 12b oder außerhalb derselben ein diesen axial vorspannendes Federelement bereitzustellen, das nur eine vergleichsweise geringe Federkraft aufweisen muss.

Die in Fig. 24 dargestellte Ausgestaltungsvariante kombiniert das Prinzip einer nasslaufenden, also durch Fluidumströmung gekühlten Kupplung, mit der Betätigung einer herkömmlichen Trockenreibkupplung. Es kann eine derartige Kupplungsanordnung also beispielsweise dort zum Einsatz kommen, wo zwar eine herkömmliche Betätigung, also Betätigung einer herkömmlichen Trockenreibkupplung, bereitgestellt sein soll, jedoch durch den bestimmten Einsatzzweck die insbesondere im Schlupfbetrieb auftretende Belastung für eine Trockenreibkupplung zu groß wäre. Es sei noch darauf hingewiesen, dass selbstverständlich bei der Ausgestaltungsform gemäß Fig. 24 hinsichtlich des Aufbaus und der Wirkung der Reiborgane alle vorangehend beschriebenen Maßnahmen bereitgestellt sein können.

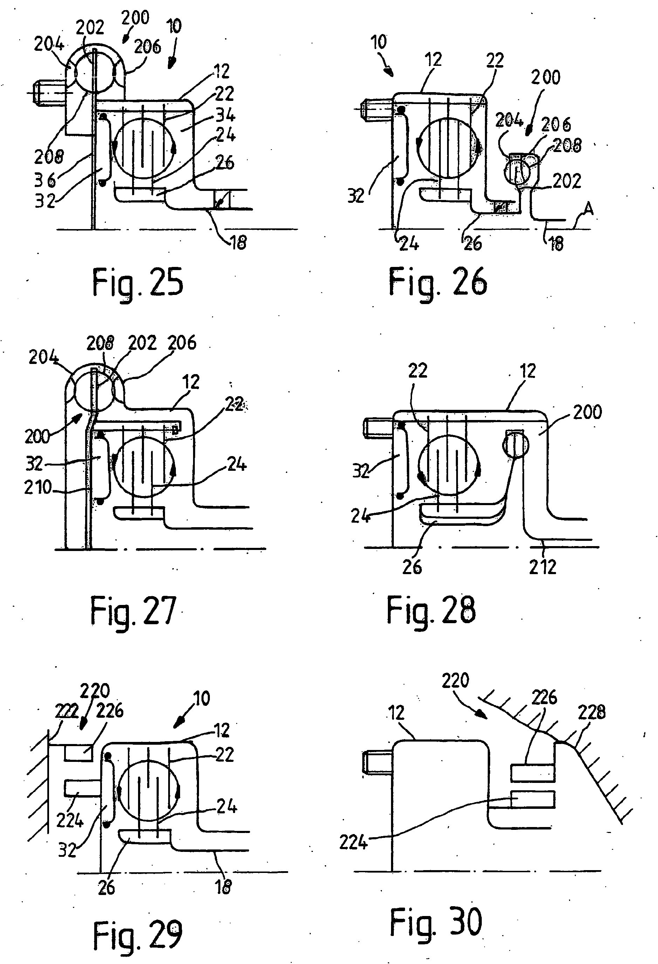

Eine Weiterbildung der erfindungsgemäßen Kupplungsanordnung ist in Fig. 25 dargestellt. Man erkennt hier, dass die Gehäuseanordnung 12 der Kupplungsanordnung 10 über einen allgemein mit 200 bezeichneten Drehschwingungsdämpfer zur gemeinsamen Drehung an eine Antriebswelle oder ein sonstiges Antriebsorgan ankoppelbar ist. Die Gehäuseanordnung 12 weist dazu einen nach radial außen flanschartig verlängerten Bereich 202 auf, der die Sekundärseite des Drehschwingungsdämpfers 200 bildet. An beiden axialen Seiten des flanschartig verlängerten Bereichs 200 sind im Wesentlichen die Primärseite bildende Deckelemente 204, 206 vorgesehen. In an sich bekannter Art und Weise wirken zwischen den Deckelementen 204, 206 und dem flanschartigen radial nach außen verlängerten Bereich mehrere Dämpferfedem 208, so dass in begrenztem Drehwinkelbereich die Gehäuseanordnung 12 sich gegen die im Wesentlichen die Primärseite bildenden Deckelemente 204, 206 verdrehen kann. Diese Primärseite kann dann über eine Flexplatte o. dgl. an die Antriebswelle angebunden sein.

Bei der in Fig. 26 dargestellten Ausgestaltungsvariante ist der Drehschwingungsdämpfer 200 abtriebsseitig vorgesehen und liegt im Drehmomentübertragungsweg zwischen dem Kopplungselement 26 und der schematisch dargestellten Abtriebswelle 18. In diesem Fall ist die Gehäuseanordnung 12 beispielsweise über eine Flexplatte direkt an die Antriebswelle angebunden. Der Drehschwingungsdämpfer 200 ist wiederum nach herkömmlicher Bauart aufgebaut und weist beispielsweise in Verbindung mit dem Kopplungselement 26 ein flanschartiges Zentralscheibenelement nach Art des in Fig. 25 erkennbaren Bereichs 202 auf sowie zwei an beiden axialen Seiten davon liegende Deckscheibenelemente 204, 206, die selbstverständlich auch integral miteinander ausgebildet sein können.

Bei der in Fig. 27 dargestellten Ausgestaltungsform ist der Drehschwingungsdämpfer 200 im Innenbereich der Gehäuseanordnung 12, d.h. in dem mit Arbeitsflüssigkeit gefüllten Raumbereich, vorhanden. Ein allgemein mit 210 bezeichnetes Trägerelement trägt sowohl die Reiborgane 22 als auch den Kupplungskolben 32 drehfest. In seinem radial äußeren Bereich bildet dieses Trägerelement 210 dann das Zentralelement 200, an dessen beiden Seiten mit der Gehäuseanordnung 12 integral ausgebildete Deckelemente 204, 206 zur Wechselwirkung mit den Dämpferfedern 208 vorgesehen sind. Auch hier ist der Drehschwingungsdämpfer 200 antriebsseitig, also im Drehmomentübertragungsweg zwischen der Antriebswelle und den Reiborganen 22 vorgesehen. Bei der in Fig. 28 dargestellten Ausgestaltungsvariante ist der Drehschwingungsdämpfer 200 wiederum innerhalb der Gehäuseanordnung 12, nunmehr jedoch abtriebsseitig zwischen dem Kopplungselement 26 und einem weiteren dann mit der Abtriebswelle drehfest gekoppelten Kopplungselement 212 angeordnet.

In Fig. 29 ist eine erfindungsgemäße Kupplungsanordnung 10 in Verbindung mit einer allgemein mit 220 bezeichneten Starter-Generator-Anordnung dargestellt. An der einem Motorblock 222 zugewandten Seite trägt die Gehäuseanordnung eine Rotoranordnung 224 der Starter-Generator-Anordnung, die beispielsweise auch über den Torsionsschwingungsdämpfer 200 mit der Gehäuseanordnung 12 zur gemeinsamen Drehung gekoppelt sein kann. Entweder radial innerhalb oder, wie im dargestellten Beispiel, radial außerhalb der Rotoranordnung 24 liegt die Leitungsspulen aufweisende Statoranordnung 226 der Starter-Generator-Anordnung 220. Die Statoranordnung 226 ist beispielsweise am Motorblock 222 drehfest gehalten.

Bei der in Fig. 30 dargestellten Ausgestaltungsvariante ist die Rotoranordnung 224 an der abtriebsseitigen Seite der Gehäuseanordnung 12 angeordnet. Die Statoranordnung 226 ist beispielsweise an der Innenseite einer Getriebeglocke 228 getragen.

Es sei darauf hingewiesen, dass in den mit Bezug auf die Fig. 25 - 30 beschriebenen Ausgestaltungsformen der innere Aufbau der Kupplungsanordnungen insbesondere insofern, als die verschiedenen Reiborgane betroffen sind, so wie vorangehend mit Bezug auf die Fig. 1 - 24 beschrieben ausgebildet sein kann. Auch hier wird, wie durch Zirkulationskreise angedeutet, die die Reiborgane umströmende Fluidzirkulation bereitgestellt. Es ist selbstverständlich, bei einer erfindungsgemäßen Kupplungsanordnung 10 sowohl den Drehschwingungsdämpfer 200 als auch die Starter-Generator-Anordnung 220 vorzusehen. Beispielsweise ist es möglich, eine Antriebswelle über eine Flexplatte o. dgl. mit der Rotoranordnung der Starter-Generator-Anordnung zu koppeln, die Rotoranordnung mit der Eingangsseite oder Primärseite des Drehschwingungsdämpfers zu koppeln und die Ausgangsseite des Drehschwingungsdämpfers dann mit der Gehäuseanordnung der erfindungsgemäßen Kupplungsanordnung zu koppeln.

Es sei weiter noch darauf hingewiesen, dass das Erfindungsprinzip der Erzeugung einer Fluidzirkulation im Bereich der reibend miteinander in Wechselwirkung bringbaren Reiborgane selbstverständlich auch Anwendung finden kann bei Doppel-Nasslaufkupplungsanordnungen, bei welchen über zwei Sätze von Reiborganen zwei verschiedene Abtriebswellen durch wahlweises Einrücken einer der beiden Nasslaufkupplungen in Drehmomentübertragungsverbindung mit einer Antriebswelle gebracht werden können.

## Patentansprüche

1. Kupplungsanordnung, insbesondere für ein Kraftfahrzeug, umfassend:
- eine mit Fluid gefüllte Gehäuseanordnung (12; 12a),
- wenigstens ein mit der Gehäuseanordnung (12; 12a) gemeinsam drehbares erstes Reiborgan (22; 22a),
- wenigstens ein mit einem Abtriebsorgan (18) gemeinsam drehbares zweites Reiborgan (24; 24a), welches zur Herstellung einer Reibwechselwirkung in Anlage an das wenigstens eine erste Reiborgan (22; 22a) bringbar ist, wobei das wenigstens eine erste Reiborgan (22, 22a) Zur Erzeugung einer die Reiborgane (22, 24, 22a, 24a) umströmenden Fluidzirkulation ausgebildet ist, und wobei das wenigstens eine erste Reiborgan (22; 22a) wenigstens eine Fluidförderfläche (74, 76; 74a, 76a) aufweist
**dadurch gekennzeichnet, dass**
- das wenigstens eine zweite Reiborgan (24; 24a) zur Erzeugung einer die Reiborgane (22, 24; 22a, 24a) umströmenden Fluidzirkulation ausgebildet ist,
- das wenigstens eine zweite Reiborgan (24; 24a) wenigstens eine Fluidförderfläche (74, 76; 74a, 76a) aufweist, und
- eine Fluidströmungsanordnung zur Zu- oder Abfuhr von Fluid vorgesehen ist.

2. Kupplungsanordnung nach Anspruch 1,
**dadurch gekennzeichnet, dass** die wenigstens eine Fluidförderfläche (74, 76; 74a, 76a) eine Radialerstreckungskomponente und eine Axialerstreckungskomponente aufweist.

3. Kupplungsanordnung nach Anspruch 1 oder 2,
**dadurch gekennzeichnet, dass** die wenigstens eine Fluidförderfläche (74, 76; 74a, 76a) wenigstens bereichsweise mit einer im Wesentlichen tangential orientierten Flächennormalen ausgebildet ist.

4. Kupplungsanordnung nach einem der Ansprüche 1 bis 3,
**dadurch gekennzeichnet, dass** das wenigstens eine erste Reiborgan (22a) oder/und das wenigstens eine zweite Reiborgan (24a) an wenigstens einer axialen Seite eine die wenigstens eine Fluidförderfläche (74a, 76a) bereitstellende Reibbelaganordnung (52a, 54a) aufweist.

5. Kupplungsanordnung nach Anspruch 4,
**dadurch gekennzeichnet, dass** die wenigstens eine Fluidförderfläche (74a, 76a) wenigstens eine einen nutartigen Kanal (80a) in der Reibbelaganordnung (52a, 54a) in Umfangsrichtung begrenzende Wandung umfasst.

6. Kupplungsanordnung nach Anspruch 4 oder 5,
**dadurch gekennzeichnet, dass** das wenigstens eine erste Reiborgan (22a) oder/und das wenigstens eine zweite Reiborgan (24a) an beiden axialen Seiten jeweils Fluidförderflächen (74a, 76a) bereitstellende Reibbelaganordnungen (52a, 54a) aufweist.

7. Kupplungsanordnung nach Anspruch 4 oder 5,
**dadurch gekennzeichnet, dass** das wenigstens eine erste Reiborgan (22a) oder/und das wenigstens eine zweite Reiborgan (24a) nur an einer axialen Seite eine wenigstens eine Fluidförderfläche (74a, 76a) bereitstellende Reibbelaganordnung (52a, 54a) aufweist und dass der anderen axialen Seite eine Reibbelaganordnung (52a, 54a) eines weiteren Reiborgans (22a, 24a) gegenüberliegt=

8. Kupplungsanordnung nach einem der Ansprüche 1 bis 7,
**dadurch gekennzeichnet, dass** das wenigstens eine erste Reiborgan (22) oder/und das wenigstens eine zweite Reiborgan (24) einen Reibbelagträger (56) aufweist, welcher vorzugsweise an wenigstens einer axialen Seite eine Reibbelaganordnung (52, 54) trägt, und dass wenigstens eine Fluidförderfläche (74, 76) durch den Reibbelagträger (56) bereitgestellt ist.

9. Kupplungsanordnung nach Anspruch 8,
**dadurch gekennzeichnet, dass** der Reibbelagträger (56) in Umfangsrichtung aufeinander folgende, axial zueinander versetzte Belagtrageabschnitte (58, 60) aufweist, welche durch Verbindungsabschnitte (72) miteinander verbunden sind, und dass die wenigstens eine Fluidförderfläche (74, 76) durch einen Verbindungsabschnitt (72) bereitgestellt ist.

10. Kupplungsanordnung nach Anspruch 9,
**dadurch gekennzeichnet, dass** der Reibbelagträger (56) durch Umformen eines im Wesentlichen ringartigen Blechrohlings gebildet ist.

11. Kupplungsanordnung nach Anspruch 9 oder 10,
**dadurch gekennzeichnet, dass** an den zueinander axial versetzten Belagtrageabschnitten (58, 60) an deren jeweils voneinander weg gerichteten axialen Seiten Belagsegmente (62, 64) jeweiliger Reibbelaganordnungen (52, 54) vorgesehen sind.

12. Kupplungsanordnung nach einem der Ansprüche 1 bis 11,
**gekennzeichnet durch** eine Mehrzahl von in Umfangsrichtung aufeinander folgenden Fluidförderflächen (74, 76; 74a, 76a) an dem wenigstens einen ersten Reiborgan (22; 22a) oder/und an dem wenigstens einen zweiten Reiborgan (24; 24a).

13. Kupplungsanordnung nach einem der Ansprüche 1 bis 12,
**gekennzeichnet durch** ein Anpresselement (32; 32a), **durch** welches die ersten und zweiten Reiborgane (22, 24; 22a, 24a) in Reibwechselwirkung miteinander bringbar sind, wobei **durch** das Anpresselement (32; 32a) ein Innenraumbereich der Gehäuseanordnung (12; 12a) in den die Reiborgane (22, 24; 22a, 24a) enthaltenden ersten Raumbereich (34; 34a) und einen zweiten Raumbereich (36; 36a) unterteilt ist.

14. Kupplungsanordnung nach einem der Ansprüche 1 bis 13,
**dadurch gekennzeichnet, dass** die Fluidströmungsanordnung vorgesehen ist zur Zufuhr von Fluid in den ersten Raumbereich (34; 34a) und zur Abfuhr von Fluid aus dem ersten Raumbereich (34; 34a) im Wesentlichen unabhängig von der Fluidzirkulation.

15. Kupplungsanordnung nach Anspruch 13,
**dadurch gekennzeichnet, dass** der erste Raumbereich (34; 34a) gegen Fluidaustausch im Wesentlichen abgeschlossen ist.

16. Kupplungsanordnung nach einem der Ansprüche 13 bis 15,
**dadurch gekennzeichnet, dass** in den zweiten Raumbereich (36; 36a) Fluid zur Beaufschlagung des Anpresselements (32; 32a) zur Erzeugung der Reibwechselwirkung der Reiborgane (22, 24; 22a, 24a) einleitbar ist.

17. Kupplungsanordnung nach einem der Ansprüche 13 bis 15,
**dadurch gekennzeichnet, dass** das Anpresselement (32b) zur Erzeugung der Reibwechselwirkung durch eine im Wesentlichen außerhalb der Gehäuseanordnung (12b) vorgesehene Betätigungsanordnung (158b) beaufschlagbar ist.

18. Kupplungsanordnung nach einem der Ansprüche 1 bis 17,
**dadurch gekennzeichnet, dass** das wenigstens eine erste Reiborgan (22) oder/und das wenigstens eine zweite Reiborgan (24) einen Reibbelagträger mit einer zur Erzeugung der Fluidzirkulation beitragenden lappenartigen Abbiegung (127) aufweist.

19. Kupplungsanordnung nach einem der Ansprüche 1, bis 18,
**dadurch gekennzeichnet, dass** die Anzahl der an dem wenigstens einen ersten Reiborgan (22; 22a) vorgesehenen Fluidförderflächen oder/und die Anzahl der an dem wenigstens einen zweiten Reiborgan (24; 24a) vorgesehenen Fluidförderflächen im Bereich von 6 - 48, vorzugsweise bei 24, liegt.

20. Kupplungsanordnung nach einem der Ansprüche 1 bis 19,
**dadurch gekennzeichnet, dass** bei dem wenigstens einen ersten Reiborgan (22; 22a) oder/und bei dem wenigstens einen zweiten Reiborgan (24; 24a):
- eine Fluidförderflächeninnenabmessung (d) zu einer Fluidförderflächenaußenabmessung (D) ein Verhältnis (d/D) im Bereich von 0,35 - 0,85, vorzugsweise etwa 0,6, aufweist oder/und
- eine Außenabmessung (Dₐ) eines äußeren Fluidumlenkungsraumes zu einer Fluidförderflächenaußenabmessung (D) ein Verhältnis (Dₐ/D) im Bereich von 1,03 -1,2, vorzugsweise etwa 1,1, aufweist oder/und
- eine Innenabmessung (dᵢ) eines inneren Fluidumlenkungsraumes zu einer Fluidförderflächeninnenabmessung (d) ein Verhältnis (dᵢ/d) von 0,4 - 0,9, vorzugsweise etwa 0,7, aufweist.

21. Kupplungsanordnung nach einem der Ansprüche 1 bis 20,
**dadurch gekennzeichnet, dass** eine Axialabmessung eines durch die zur Fluidzirkulation beitragenden ersten Reiborganes (22; 22a) eingenommenen Axialerstreckungsbereiches zu einer Axialabmessung eines durch die zur Fluidzirkulation beitragenden zweiten Reiborganes (24; 24a) eingenommenen Axialerstreckungsbereiches ein Verhältnis im Bereich von 0,5 - 1,2, vorzugsweise etwa 1, aufweist.

22. Kupplungsanordnung nach einem der Ansprüche 1 bis 21,
**dadurch gekennzeichnet, dass** an wenigstens einem ersten Reiborgan (22; 22a) oder/und an wenigstens einem zweiten Reiborgan (24; 24a) ein Reibbelag vorgesehen ist, dessen Innenabmessung (d_{B}) zu seiner Außenabmessung (D_{B}) ein Verhältnis im Bereich von 0,6 - 0,9, vorzugsweise 0,75, aufweist.

23. Kupplungsanordnung nach einem der Ansprüche 1 bis 22,
**gekennzeichnet durch** eine Drehschwingungsdämpferanordnung (200) im Drehmomeritübertragungsweg zwischen einem mit der Gehäuseanordnung (12) zu koppelnden Antriebsorgan und dem wenigstens einen ersten Reiborgan (22) oder/und im Drehmomentübertragungsweg zwischen dem wenigstens einen zweiten Reiborgan (24) und dem Abtriebsorgan (18).

24. Kupplungsanordnung nach einem der Ansprüche 1 bis 23,
**gekennzeichnet durch** eine Starter-Generator-Anordnung (220), wobei eine vorzugsweise Permanentmagneten tragende Rotoranordnung (224) der Starter-Generator-Anordnung mit der Gehäuseanordnung (12) zur gemeinsamen Drehung gekoppelt ist.

## Claims

1. Clutch arrangement, in particular for a motor vehicle, comprising:
- a housing arrangement (12; 12a) which is filled with fluid,
- at least one first friction element (22; 22a) which can be rotated together with the housing arrangement (12; 12a),
- at least one second friction element (24; 24a) which can be rotated together with an output element (18) and can be brought to rest against the at least one first friction element (22; 22a) in order to produce a frictional interaction, wherein the at least one first friction element (22, 22a) is designed in a manner to cause the fluid to circulate around the friction elements (22, 24, 22a, 24a), and wherein
- the at least one first friction element (22; 22a) has at least one fluid-conveying surface (74, 76; 74a, 76a),
**characterized in that**
- the at least one second friction element (24; 24a) is designed in a manner to cause the fluid to circulate around the friction elements (22, 24; 22a, 24a),
- the at least one second friction element (24; 24a) has at least one fluid-conveying surface (74, 76; 74a, 76a), and
- a fluid flow arrangement is provided for feeding or removing fluid.

2. Clutch arrangement according to Claim 1, **characterized in that** the at least one fluid-conveying surface (74, 76; 74a, 76a) has a component of radial extent and a component of axial extent.

3. Clutch arrangement according to Claim 1 or 2, **characterized in that** the at least one fluid-conveying surface (74, 76; 74a, 76a) is designed at least in some regions with an essentially tangentially orientated surface perpendicular.

4. Clutch arrangement according to one of Claims 1 to 3, **characterized in that** the at least one first friction element (22a) or/and the at least one second friction element (24a) has, on at least one axial side, a friction lining arrangement (52a, 54a) which provides the at least one fluid-conveying surface (74a, 76a).

5. Clutch arrangement according to Claim 4, **characterized in that** the at least one fluid-conveying surface (74a, 76a) comprises at least one wall which bounds a groove-like channel (80a) in the friction lining arrangement (52a, 54a) in the circumferential direction.

6. Clutch arrangement according to Claim 4 or 5, **characterized in that** the at least one first friction element (22a) or/and the at least one second friction element (24a) has, on both axial sides, friction lining arrangements (52a, 54a) which each provide fluid-conveying surfaces (74a, 76a).

7. Clutch arrangement according to Claim 4 or 5, **characterized in that** the at least one first friction element (22a) or/and the at least one second friction element (24a) has, just on one axial side, a friction lining arrangement (52a, 54a) which provides at least one fluid-conveying surface (74a, 76a), and **in that** a friction lining arrangement (52a, 54a) of a further friction element (22a, 24a) lies opposite the other axial side.

8. Clutch arrangement according to one of Claims 1 to 7, **characterized in that** the at least one first friction element (22) or/and the at least one second friction element (24) has a friction lining carrier (56) which, preferably on at least one axial side, carries a friction lining arrangement (52, 54), and **in that** at least one fluid-conveying surface (74, 76) is provided by the friction lining carrier (56).

9. Clutch arrangement according to Claim 8, **characterized in that** the friction lining carrier (56) has lining-carrying sections (58, 60) which follow one another in the circumferential direction, are offset axially with respect to one another and are connected to one another by connecting sections (72), and **in that** the at least one fluid-conveying surface (74, 76) is provided by a connecting section (72).

10. Clutch arrangement according to Claim 9, **characterized in that** the friction lining carrier (56) is formed by deformation of an essentially ring-like sheet-metal blank.

11. Clutch arrangement according to Claim 9 or 10, **characterized in that** on the lining-carrying sections (58, 60), which are offset axially with respect to one another, lining segments (62, 64) of respective friction lining arrangements (52, 54) are provided on the axial sides of said lining-carrying sections, which sides are in each case directed away from one another.

12. Clutch arrangement according to one of Claims 1 to 11, **characterized by** a plurality of fluid-conveying surfaces (74, 76; 74a, 76a), which follow one another in the circumferential direction, on the at least one first friction element (22; 22a) or/and on the at least one second friction element (24; 24a).

13. Clutch arrangement according to one of Claims 1 to 12, **characterized by** a pressing element (32; 32a) by means of which the first and second friction elements (22, 24; 22a, 24a) can be brought into frictional interaction with each other, the pressing element (32; 32a) dividing an interior region of the housing arrangement (12; 12a) into the first space region (34; 34a) containing the friction elements (22, 24; 22a, 24a) and a second space region (36; 36a) .

14. Clutch arrangement according to one of Claims 1 to 13, **characterized in that** the fluid flow arrangement is provided for feeding fluid into the first space region (34; 34a) and for removing fluid from the first space region (34; 34a) essentially independently of the circulation of fluid.

15. Clutch arrangement according to Claim 13, **characterized in that** the first space region (34; 34a) is essentially sealed off with respect to exchange of fluid.

16. Clutch arrangement according to one of claims 13 to 15, **characterized in that** fluid can be introduced into the second space region (36; 36a) in order to act upon the pressing element (32; 32a) so as to produce the frictional interaction of the friction elements (22, 24; 22a, 24a).

17. Clutch arrangement according to one of Claims 13 to 15, **characterized in that** the pressing element (32b) is acted upon by an actuating arrangement (158b), which is provided essentially outside the housing arrangement (12b), in order to produce the frictional interaction.

18. Clutch arrangement according to one of Claims 1 to 17, **characterized in that** the at least one first friction element (22) or/and the at least one second friction element (24) has a friction lining carrier with a tab-like bent section (127) which contributes to causing the fluid to circulate.

19. Clutch arrangement according to one of Claims 1 to 18, **characterized in that** the number of fluid-conveying surfaces provided on the at least one first friction element (22; 22a) or/and the number of fluid-conveying surfaces provided on the at least one second friction element (24; 24a) is in the region of 6-48, preferably around 24.

20. Clutch arrangement according to one of Claims 1 to 19, if related back to claim 3, **characterized in that** in the at least one first friction element (22; 22a) or/and in the at least one second friction element (24; 24a):
- an internal dimension (d) of the fluid-conveying surface to an external dimension (D) of a fluid-conveying surface is in a ratio (d/D) in the region of 0.35 - 0.85, preferably approximately 0.6, or/and
- an external dimension (Dₐ) of an outer fluid-deflecting space to an external dimension (D) of a fluid-conveying surface is in a ratio (Dₐ/D) in the region of 1.03 - 1.2, preferably approximately 1.1, or/and
- an internal dimension (dᵢ) of an inner fluid-deflecting space to an internal dimension (d) of a fluid-conveying surface is in a ratio (dᵢ/d) of 0.4 - 0.9, preferably approximately 0.7.

21. Clutch arrangement according to one of Claims 1 to 20, **characterized in that** an axial dimension of a region of axial extent taken up by the first friction element (22; 22a) contributing to the circulation of fluid to an axial dimension of a region of axial extent taken up by the second friction element (24; 24a) contributing to the circulation of fluid is in a ratio in the region of 0.5 - 1.2, preferably approximately 1.

22. Clutch arrangement according to one of Claims 1 to 21, **characterized in that** a friction lining is provided on at least one first friction element (22; 22a) or/and on at least one second friction element (24; 24a), the internal dimension (d_{B}) of which is in a ratio in the region of 0.6 - 0.9, preferably 0.75, to its external dimension (D_{B}).

23. Clutch arrangement according to one of Claims 1 to 22, **characterized by** a torsional-vibration damper arrangement (200) in the torque transmission path between a driving element, which is to be coupled to the housing arrangement (12), and the at least one first friction element (22) or/and in the torque transmission path between the at least one second friction element (24) and the output element (18).

24. Clutch arrangement according to one of Claims 1 to 23, **characterized by** a starter generator arrangement (220), a rotor arrangement (224), which preferably carries permanent magnets, of the starter generator arrangement being coupled to the housing arrangement (12) for rotation together.

## Revendications

1. Ensemble d'embrayage, en particulier pour un véhicule automobile, comprenant :
- un ensemble de carter (12 ; 12a) rempli de fluide,
- au moins un premier élément de friction (22 ; 22a) rotatif conjointement avec l'ensemble de carter (12 ; 12a),
- au moins un deuxième élément de friction (24 ; 24a) qui est rotatif conjointement avec un élément de sortie (18) et qui, afin de réaliser une interaction de friction, peut être amené en application contre le premier élément de friction (22 ; 22a) au moins unique,
sachant que le premier élément de friction (22 ; 22a) au moins unique est conçu pour produire une circulation de fluide autour des éléments de friction (22, 24 ; 22a, 24a), et sachant que le premier élément de friction (22 ; 22a) au moins unique présente au moins une surface (74, 76 ; 74a, 76a) de transport de fluide,
**caractérisé en ce que**
- le deuxième élément de friction (24 ; 24a) au moins unique est conçu pour produire une circulation de fluide autour des éléments de friction (22, 24 ; 22a, 24a),
- le deuxième élément de friction (24 ; 24a) au moins unique présente au moins une surface (74, 76 ; 74a, 76a) de transport de fluide, et
- il est prévu un ensemble d'écoulement de fluide pour l'apport ou l'évacuation de fluide.

2. Ensemble d'embrayage selon la revendication 1, **caractérisé en ce que** la surface (74, 76 ; 74a, 76a) de transport de fluide au moins unique présente une composante de développement radiale et une composante de développement axiale.

3. Ensemble d'embrayage selon la revendication 1 ou 2, **caractérisé en ce que** la surface (74, 76 ; 74a, 76a) de transport de fluide au moins unique est réalisée au moins sectoriellement avec une normale à la surface orientée essentiellement tangentiellement.

4. Ensemble d'embrayage selon l'une des revendications 1 à 3, **caractérisé en ce que** le premier élément de friction (22a) au moins unique et/ou le deuxième élément de friction (24a) au moins unique présente, sur au moins un côté axial, un ensemble (52a, 54a) de garniture de friction fournissant la surface (74a, 76a) de transport de fluide au moins unique.

5. Ensemble d'embrayage selon la revendication 4, **caractérisé en ce que** la surface (74a, 76a) de transport de fluide au moins unique comprend au moins une paroi délimitant en direction circonférentielle un canal (80a) du genre rainure dans l'ensemble (52a, 54a) de garniture de friction.

6. Ensemble d'embrayage selon la revendication 4 ou 5, **caractérisé en ce que** le premier élément de friction (22a) au moins unique et/ou le deuxième élément de friction (24a) au moins unique présente sur les deux côtés axiaux des ensembles (52a, 54a) de garniture de friction fournissant des surfaces (74a, 76a) de transport de fluide respectives.

7. Ensemble d'embrayage selon la revendication 4 ou 5, **caractérisé en ce que** le premier élément de friction (22a) au moins unique et/ou le deuxième élément de friction (24a) au moins unique ne présente que sur un côté axial un ensemble (52a, 54a) de garniture de friction fournissant au moins une surface (74a, 76a) de transport de fluide, et **en ce qu'**un ensemble (52a, 54a) de garniture de friction d'un autre élément de friction (22a, 24a) fait face à l'autre côté axial.

8. Ensemble d'embrayage selon l'une quelconque des revendications 1 à 7, **caractérisé en ce que** le premier élément de friction (22) au moins unique et/ou le deuxième élément de friction (24) au moins unique présente un porte-garniture (56) qui porte un ensemble (52, 54) de garniture de friction de préférence sur au moins un côté axial, et **en ce qu'**au moins une surface (74, 76) de transport de fluide est fournie par le porte-garniture (56).

9. Ensemble d'embrayage selon la revendication 8, **caractérisé en ce que** le porte-garniture (56) présente des parties porte-garniture (58, 60) se succédant en direction circonférentielle et axialement décalées les unes par rapport aux autres, qui sont mutuellement reliées par des parties de liaison (72), et **en ce que** la surface (74, 76) de transport de fluide au moins unique est fournie par une partie de liaison (72).

10. Ensemble d'embrayage selon la revendication 9, **caractérisé en ce que** le porte-garniture (56) est formé par déformation d'une ébauche de tôle essentiellement annulaire.

11. Ensemble d'embrayage selon la revendication 9 ou 10, **caractérisé en ce que** des segments de garniture (62, 64) d'ensembles respectifs (52, 54) de garniture de friction sont prévus sur les parties porte-garniture (58, 60) axialement mutuellement décalées, sur leurs côtés axiaux respectivement opposés.

12. Ensemble d'embrayage selon l'une quelconque des revendications 1 à 11, **caractérisé par** une pluralité de surfaces (74, 76 ; 74a, 76a) de transport de fluide se succédant en direction circonférentielle sur le premier élément de friction (22 ; 22a) au moins unique et/ou sur le deuxième élément de friction (24 ; 24a) au moins unique.

13. Ensemble d'embrayage selon l'une quelconque des revendications 1 à 12, **caractérisé par** un élément presseur (32 ; 32a) par lequel les premiers et deuxièmes éléments de friction (22, 24 ; 22a, 24a) peuvent être amenés en interaction mutuelle de friction, sachant que l'élément presseur (32 ; 32a) divise une région d'espace intérieur de l'ensemble de carter (12 ; 12a) en une première région d'espace (34 ; 34a) contenant les éléments de friction (22, 24 ; 22a, 24a) et une deuxième région d'espace (36 ; 36a).

14. Ensemble d'embrayage selon l'une quelconque des revendications 1 à 13, **caractérisé en ce que** l'ensemble d'écoulement de fluide est prévu pour l'apport de fluide dans la première région d'espace (34 ; 34a) et pour l'évacuation de fluide de la première région d'espace (34 ; 34a) essentiellement indépendamment de la circulation de fluide.

15. Ensemble d'embrayage selon la revendication 13, **caractérisé en ce que** la première région d'espace (34 ; 34a) est essentiellement fermée vis-à-vis de l'échange de fluide.

16. Ensemble d'embrayage selon l'une quelconque des revendications 13 à 15, **caractérisé en ce que** du fluide peut être introduit dans la deuxième région d'espace (36 ; 36a) afin de solliciter l'élément presseur (32 ; 32a) pour produire l'interaction de friction des éléments de friction (22, 24 ; 22a, 24a).

17. Ensemble d'embrayage selon l'une quelconque des revendications 13 à 15, **caractérisé en ce que** l'élément presseur (32b) peut être sollicité, pour produire l'interaction de friction, par un ensemble d'actionnement (158b) prévu pour l'essentiel en dehors de l'ensemble de carter (12b).

18. Ensemble d'embrayage selon l'une quelconque des revendications 1 à 17, **caractérisé en ce que** le premier élément de friction (22) au moins unique et/ou le deuxième élément de friction (24) au moins unique présente un porte-garniture doté d'une partie courbée (127) du genre patte contribuant à produire la circulation de fluide.

19. Ensemble d'embrayage selon l'une quelconque des revendications 1 à 18, **caractérisé en ce que** le nombre de surfaces de transport de fluide prévues sur le premier élément de friction (22 ; 22a) au moins unique et/ou le nombre de surfaces de transport de fluide prévues sur le deuxième élément de friction (24 ; 24a) au moins unique est compris entre 6 et 48, de préférence est égal à 24.

20. Ensemble d'embrayage selon l'une quelconque des revendications 1 à 19, **caractérisé en ce que**, pour le premier élément de friction (22 ; 22a) au moins unique et/ou pour le deuxième élément de friction (24 ; 24a) au moins unique :
- une dimension intérieure (d) de la surface de transport de fluide présente, par rapport à une dimension extérieure (D) de la surface de transport de fluide, un rapport (d/D) compris entre 0,35 et 0,85, de préférence environ égal à 0,6, et/ou
- une dimension extérieure (Dₐ) d'un espace extérieur de déviation de fluide présente, par rapport à une dimension extérieure (D) de la surface de transport de fluide, un rapport (Dₐ/D) compris entre 1,03 et 1,2, de préférence environ égal à 1,1, et/ou
- une dimension intérieure (dᵢ) d'un espace intérieur de déviation de fluide présente, par rapport à une dimension intérieure (d) de la surface de transport de fluide, un rapport (dᵢ/d) compris entre 0,4 et 0,9, de préférence environ égal à 0,7.

21. Ensemble d'embrayage selon l'une quelconque des revendications 1 à 20, **caractérisé en ce qu'**une dimension axiale d'une zone d'étendue axiale occupée par le premier élément de friction (22 ; 22a) contribuant à la circulation de fluide présente, par rapport à une dimension axiale d'une zone d'étendue axiale occupée par le deuxième élément de friction (24 ; 24a) contribuant à la circulation de fluide, un rapport compris entre 0,5 et 1,2, de préférence environ égal à 1.

22. Ensemble d'embrayage selon l'une quelconque des revendications 1 à 21, **caractérisé en ce que**, sur au moins un premier élément de friction (22 ; 22a) et/ou sur au moins un deuxième élément de friction (24 ; 24a), il est prévu une garniture de friction dont la dimension intérieure (d_{B}) présente par rapport à sa dimension extérieure (D_{B}) un rapport compris entre 0,6 et 0,9, de préférence égal à 0,75.

23. Ensemble d'embrayage selon l'une quelconque des revendications 1 à 22, **caractérisé par** un ensemble (200) amortisseur de vibrations de torsion dans le chemin de transmission de couple entre un élément d'entraînement à accoupler à l'ensemble de carter (12) et le premier élément de friction (22) au moins unique, et/ou dans le chemin de transmission de couple entre le deuxième élément de friction (24) au moins unique et l'élément de sortie (18).

24. Ensemble d'embrayage selon l'une quelconque des revendications 1 à 23, **caractérisé par** un ensemble (220) de démarreur-dynamo, sachant qu'un ensemble de rotor (224), portant de préférence des aimants permanents, de l'ensemble de démarreur-dynamo est accouplé en rotation conjointe à l'ensemble de carter (12).
